Europäisches Patentamt

European Patent Office

Office européen des brevets

(19)

(11) **EP 1 460 656 A1**

(12) # EUROPEAN PATENT APPLICATION

(43) Date of publication:
**22.09.2004 Bulletin 2004/39**

(51) Int Cl.⁷: **H01F 41/02**, H01F 1/18,
C21D 8/12, B32B 15/08

(21) Application number: **04006094.9**

(22) Date of filing: **15.03.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL LT LV MK**

(30) Priority: **17.03.2003 JP 2003072531
07.10.2003 JP 2003348873**

(71) Applicant: **TDK Corporation
Tokyo 103-8272 (JP)**

(72) Inventors:
• **Wakayama, Katsuhiko
Tokyo 103-8272 (JP)**
• **Hashimoto, Yasuo
Tokyo 103-8272 (JP)**

• **Kakinuma, Akira
Tokyo 103-8272 (JP)**
• **Chou, Tsutomu
Tokyo 103-8272 (JP)**
• **Iijima, Yasushi
Tokyo 103-8272 (JP)**
• **Kaya, Masanori
Tokyo 103-8272 (JP)**
• **Tasaki, Kazunori
Tokyo 103-8272 (JP)**

(74) Representative: **HOFFMANN - EITLE
Patent- und Rechtsanwälte
Arabellastrasse 4
81925 München (DE)**

(54) **Production method of laminated soft magnetic member, production method of soft magnetic sheet, and method for heat treating laminated soft magnetic member**

(57) By laminating soft magnetic sheets 1, 11, a laminated soft magnetic member 5 in which insulating layers and soft magnetic metal layers are alternately laminated is produced. In this case, prior to laminating the obtained soft magnetic sheets 1, 11, or posterior to obtaining the laminated soft magnetic member 5 by laminating the soft magnetic sheets 1, 11, heat treatment is conducted under the conditions predetermined depending on the purpose of the heat treatment. During the heat treatment, pressing treatment can also be conducted concurrently. Additionally, when the heat treatment is conducted under the condition in which a tension is applied, further improvement of the magnetic properties can be expected.

## FIG. 7A

EP 1 460 656 A1

## FIG. 7B

**Description**

BACKGROUND OF THE INVENTION

Field of the Invention

The present invention relates to a production method and the like of a laminated soft magnetic member which can be used as installed in an electronic appliance such as a cellular phone.

Description of the Related Art

As high speed operation processing and digitization have been developed in electronic appliances such as personal computers and cellular phones, the electromagnetic interference (EMI) has been growing. Particularly, sometimes misoperations are caused by noises in digital appliances, and hence it is important to reduce the noises generated by digital appliances.

As for personal computers still now continuing to grow in diffusion rate, as the clock frequencies of the CPUs move to the higher frequencies, the frequencies of the generated noises are markedly increased. CPUs with clock frequency exceeding 1 GHz have come into practical use, and accordingly the target frequencies in the countermeasures against the noises come to be extended to high frequency band of the order of 5 GHz.

Conventionally, as a countermeasure against noises, noise filters constituted by magnetic materials are used for absorbing noises. Typical examples of the magnetic materials constituting noise filters include ferrite materials having the spinel type crystal structure. In the higher frequency bands, the larger the electric resistance of a material, the smaller the eddy current loss is and hence the more advantageous in noise absorption the material is. Accordingly, as far as the higher frequency bands are concerned, nickel based ferrite materials have been used which are large in electric resistance among ferrite materials. However, when noises fall within the gigahertz band (hereinafter referred to as "GHz band"), "the Snoek' s Freq. Limit" emerges as a problem. In other words, ferrite materials have the upper limit of 1 GHz for the frequency band of noise absorption, and can hardly deal with the high frequency noises encountered in these days. Additionally, ferrite materials are brittle materials, and sometimes fracture has been caused by dropping, shock, and the like.

As a material excellent in noise absorption properties in the high frequency band exceeding 1 GHz, a composite soft magnetic member has been proposed in which a soft magnetic metal powder is dispersed in resin or rubber. For example, a composite magnetic material has been proposed in which a soft magnetic flaky Fe-Si based alloy powder is oriented and aligned in rubber and resin (see, for example, Japanese Patent Laid-Open No. 09-35927, "Kogyo Zairyou (Industrial Materials)," pp. 31 to 35, pp.36 to 40, October, 1998).

This composite magnetic material has an excellent noise absorption property in the high frequency band and over a wide band width. Furthermore, its base is composed of flexible rubber or resin, so that it is not involved in an apprehension that fracture will be caused by dropping and shock in contrast to the ferrite materials. Thus, the composite magnetic material can be said to be a very practical noise absorber.

A composite soft magnetic member is produced by mixing and dispersing a soft magnetic metal powder in an insulator matrix such as rubber and plastic resin, and by applying thereafter press molding, extrusion molding, calendar roll molding and the like. Selection of the matrix and processing method make it possible to produce composite soft magnetic members of various shapes such as sheets of the order of 0.25 mm to a few mm, blocks, and the like. Selection of the matrix and regulation of the thickness make it possible to provide the composite soft magnetic members with flexibility or contrarily to provide them with increased rigidity. Additionally, selection of the matrix makes it possible to make the composite soft magnetic members to be usable at temperatures as high as 250°C.

As soft magnetic metal powders, the Fe-Si based, Fe-Si-Al based, and stainless steel based materials are in practical use. The factors governing the electromagnetic properties include the properties of the magnetic material itself, the shape and size of the magnetic powder, and the mixing ratio, orientation and alignment of the powder in relation to the matrix. One of the essential points for attaining wide-band/high magnetic loss properties involves the shape/size and the degree of orientation of the powder. Specifically, the higher the aspect ratio (the width-to-height ratio) of a flaky (scale like) powder is, the larger themagnetic loss obtained is, so that the band broadening can be attained. However, some magnetic materials are incompatible with the flaky powder shape. Composite formation of a matrix and a powder is sometimes accompanied by the magnetostriction constant variation and accordingly by degradation of the property caused by the compression stress and tensile stress exerted on the powder.

Cellular phones have been year by year reduced in size and weight, and accordingly when a cellular phone is used, the position of the antenna thereof is located very closely to the human body, in particular, to the head. In this case, the properties of the antenna are affected by the human body, and thus the performance of the antenna tends to be degraded. In other words, the electric power loss, caused by the partial absorption by the human body of the electromagnetic wave radiated by the antenna, leads to the lowering of the receiving sensitivity and the reduction of the operation life of the battery.

On one hand, the absorption of electromagnetic wave by the human body is increasing, and hence the adverse effect thereof on the human body is apprehended. Accordingly, the guidelines on the specific absorption are enacted in some countries including Japan. As the evaluation quantity of the specific absorption defined in the guidelines of the specific absorption in these countries, the SAR (specific absorption rate) defined by the following formula is adopted:

$$SAR = \sigma E^2/2\rho$$

(E: the electric field entering into a human body, σ: the permittivity of the human body tissue, p: the density of the human body tissue)

Accordingly, a method has been proposed in which a low loss magnetic plate is arranged near the antenna as a method for reducing the SAR while improving the efficiency of the electromagnetic wave radiation from a cellular phone, namely, the radiation efficiency. However, in a method applying a magnetic plate made of a composite material composed of a fine magnetic powder and a resin, the improvement of radiation efficiency is still as small as 0.6 dB even with a plate thickness of 5 mm. For the purpose of meeting the reduction in size and weight of cellular phones, the plate thickness is made to be preferably 0.2 mm or less, more preferably 0.1 mm or less. In other words, it is difficult to apply the low loss magnetic plate to the cellular phone.

As a member serving as a countermeasure to deal with the improvement of radiation efficiency and SAR in the cellular phone, the above described composite soft magnetic member can be attached to the inside or the exterior of a cellular phone housing; however, the aforementioned composite soft magnetic member has low permeability, for example, in the high frequency band ranging from 800 MHz to 3 GHz, and hence it is hardly possible to obtain desired properties with the member thickness of 0.2 mm or less.

Thus, the present invention provides a method and the like for producing a laminated soft magnetic member which has excellent permeability in the high frequency band even if the member is thin. Furthermore, the present invention provides a production method of a soft magnetic sheet suitable for use in such laminated soft magnetic member.

SUMMARY OF THE INVENTION

Conventional composite soft magnetic members have, as described above, a structure in which a soft magnetic metal powder is mixed and dispersed in an insulator matrix composed of rubber, plastic resin and the like. In this case, a diamagnetic field comes to be generated between the soft magnetic metal powder particles dispersed in a matrix. A soft magnetic metal powder is mainly produced by means of the water atomizing method, and hence the stress remains even with a heat treatment conducted thereafter. Accordingly, the composite soft magnetic members have poor permeability in the high frequency band exceeding 800 MHz.

In these circumstances, the present inventors attempted lamination of a plurality of layers made of a soft magnetic metal with insulating layers interposed therebetween, instead of dispersion of a soft magnetic metal powder in an insulator matrix as in the conventional composite soft magnetic members. Thus, the present inventors have come to confirm that by forming a soft magnetic metal films on each of sheets of film made of a resin by means of plating or the like, and by laminating the sheets thus formed, a laminated soft magnetic member of 0. 2 mm or less in thickness can be obtained, and the laminated soft magnetic member exhibits higher permeability than those of the conventional composite soft magnetic members in the high frequency band exceeding 800 MHz. In this connection, the present inventors have already made an application for a soft magnetic sheet and the like having the essence so that "a laminated soft magnetic member which is a laminated body in which a plurality of soft magnetic metal layers and insulating layers interposed between the above described plurality of soft magnetic metal layers are laminated together," and "comprising insulating resin films and soft magnetic metal layers formed directly or indirectly on the above described insulating resin films" (Japanese Patent Laid-Open No. 2002-359113).

The above described composite soft magnetic member attached to the inside or the exterior of a cellular phone housing makes it possible to improve the radiation efficiency of the electromagnetic wave in the high frequency band and to reduce the SAR.

The present inventors further advanced a diligent study on such laminated soft magnetic member and a soft magnetic sheet as described above.

In the course of the study, the inventors discovered that vacuum evaporation of a metal sublayer on an insulating layer formed of PET (polyethylene terephthalate) and the like and formation thereon of a soft magnetic metal layer by plating cause stress in the soft magnetic metal layer, and probably this stress degrades the magnetic properties of the laminated soft magnetic member and the soft magnetic sheet.

The production method of the laminated soft magnetic member of the present invention, invented in these circumstances, in which a plurality of soft magnetic metal layers and insulating layers interposed between the plurality of soft magnetic metal layers are laminated together, is characterized in that the method comprises: a sheet formation step for obtaining a soft magnetic sheet by forming a soft magnetic metal layer on an insulating resin film forming an insulating layer; a lamination step for obtaining a laminated soft magnetic member by laminating a plurality of soft magnetic sheets; and a heat treatment step for subjecting the soft magnetic sheet obtained in the sheet formation step or the laminated soft magnetic member obtained in the lamination step to a heat treatment under the conditions set depending on the magnetic properties required for the laminated soft magnetic member in the completed condition thereof.

Application of the heat treatment to the soft magnetic sheet obtained in the sheet formation step or the laminated magnetic member obtained in the lamination step alters the magnetic properties of the laminated magnetic member depending on the conditions involving the temperature, time and the like. Accordingly, for example, the optimal heat treatment conditions are determined in compliance with the magnetic properties required for the use and the like of the laminated magnetic member in the completed condition thereof; here, examples of the required magnetic properties include high magnetic properties in a particular frequency band, high magnetic properties along a particular direction, and on the contrary stable magnetic properties small (or vanishing) in anisotropy. The completed condition as referred to here means a condition in which the heat treatment has been performed. Such heat treatment conditions also vary depending on the thickness and material of the insulating resin film forming the insulating layer, the thickness and composition of the soft magnetic metal layer, and the like.

The above described heat treatment step can be conducted either before or after the lamination step. Furthermore, the heat treatment step can be conducted concurrently with the lamination step. In such case, it is preferable that a plurality of soft magnetic sheets obtained in the sheet formation step are arranged so as to face each other and are laminated together by passing through rolls beforehand heated to a predetermined temperature.

Additionally, in the heat treatment step, in addition to heating, a predetermined pressure may be applied to the soft magnetic sheets or the laminated soft magnetic member.

Furthermore, when the pressing treatment is conducted, the applied pressure is preferably made to be 180 to 2,000 MPa.

Furthermore, the present invention recommends that the soft magnetic sheet obtained in the sheet formation step or the laminated soft magnetic member obtained in the lamination step is heat treated while the sheet or the member is tensioned. Heat treatment under the condition in which a tension is applied is expected to further improve the magnetic properties, and moreover, makes it possible to ensure the straightness of the obtained soft magnetic sheet or the obtained laminated soft magnetic member. Additionally, the soft magnetic sheet or the laminated soft magnetic member can be prevented beforehand from being wrinkled.

The heat treatment with the tension applied can also be conducted either before and after the lamination step. Furthermore, the heat treatment step can be conducted concurrently with the lamination step.

The heat treatment step can be conducted so that either the soft magnetic sheet obtained in the sheet formation step or the laminated soft magnetic member obtained in the lamination step is made to contact a roll being maintained at a predetermined temperature.

Additionally, rolling can also be applied to the soft magnetic sheet obtained in the sheet formation step or the laminated soft magnetic member obtained in the lamination step, by the use of a pair of rolls in which at least one roll is maintained at a predetermined temperature.

Furthermore, the rolling of a plurality of superposed soft magnetic sheets also makes it possible to simultaneously conduct the heat treatment step and the lamination step to obtain the laminated soft magnetic member.

The tension T applied in this case is preferably so that $0.01\,\sigma \leq T < 0.1\,\sigma$ where $\sigma$ denotes the tensile strength of the insulating resin film. Moreover, tension T is so that $0.04\,\sigma \leq T \leq 0.8\,\sigma$.

In the case where the insulating resin film is made of polyethylene terephthalate, the temperature for the heat treatment is preferably 70 to 150°C, and in the case where the heat treatment is continued over a certain period of time, the time duration is preferably 60 seconds or more. Furthermore, in the case where the pressing treatment is conducted by rolling, the applied pressure is preferably 180 to 2,000 MPa.

The configuration of the soft magnetic sheet in the laminated soft magnetic member thus obtained is so that the soft magnetic metal layer is formed directly or indirectly on the insulating resin film. When the soft magnetic metal layer is formed indirectly on the insulating resin film, after a metal sublayer has been formed on the insulating resin film, the plating with the soft magnetic metal can be applied to the metal sublayer.

The present invention can be taken as a production method of a soft magnetic sheet in which a soft magnetic metal layer is formed on an insulating resin film. In this case, the present invention is characterized in that the method comprises: a step for obtaining a soft magnetic sheet by forming a soft magnetic metal layer on an insulating resin film with the aid of the direct or indirect plating of the soft magnetic metal; and a step for adjusting the magnetic properties of the soft magnetic sheet so as to meet the conditions determined in compliance with the magnetic properties required for the softmagneticmember, constitutedwiththesoftmagneticsheets, in completed condition thereof.

Here, the step for adjusting the magnetic properties is preferably conducted by heating the soft magnetic sheet.

Additionally, the soft magnetic sheet can also be continuously heated over a period of time which is predetermined by the magnetic properties required for the soft magnetic member, constituted with the soft magnetic sheets, in the completed condition thereof.

Furthermore, a predetermined pressure can also be applied to the soft magnetic sheet when the soft magnetic sheet is heated.

Additionally, the heat treatment can also be applied to the soft magnetic sheet under the condition such that a predetermined tension is applied to the soft magnetic sheet.

Here, the heat treatment can be conducted by passing the soft magnetic sheet through a pair of rolls in which at least one roll is maintained at a predetermined temperature.

Such a soft magnetic sheet can alone constitute the soft magnetic member; however, a plurality of soft magnetic sheets can be laminated to constitute the soft magnetic member (laminated soft magnetic member).

Additionally, in the step for obtaining the soft magnetic sheet, after the metal sublayer has been formed on the insulating resin film, the plating of the soft magnetic metal can be applied to the metal sublayer.

The insulating resin filmcanbe formedof a heat-resistant resin material such as polyimide resin, polyamide resin and fluorocarbon resin, and additionally can also be formed of polyethylene terephthalate or polybutylene terephthalate.

Additionally, the present invention can be taken as a method for heat treating the laminated soft magnetic member characterized in that the method applies a heat treatment to a laminated soft magnetic member in which a plurality of the soft magnetic metal layers andthe insulating layers interposed between the plurality of the soft magnetic metal layers are laminated together, in compliance with the properties required for the laminated soft magnetic member in the completed condition thereof.

Additionally, the present invention can be taken as a method for heat treating the laminated soft magnetic member characterized in that the method applies a heat treatment to a laminated soft magnetic member in which a plurality of the soft magnetic metal layers and the insulating layers interposed between the plurality of the soft magnetic metal layers are laminated together, under the condition so that a tension is applied to the laminated soft magnetic member.

As described in the production method of the above described laminated soft magnetic member, the production and the heat treatment of the laminated soft magnetic member can be conducted as a continuous step, and on the other hand, only the heat treatment may be applied to the laminated soft magnetic member as produced.

Such heat treatment can be conducted for the purpose of adjusting the magnetic properties of the laminated soft magnetic member.

The present inventors discovered, in the course of the above described investigation, that when a metal sublayer is vacuum deposited on the insulating layer and furthermore the soft magnetic metal layer is formed by plating thereon, probably owing to the stress generated in the soft magnetic metal layer, roll-like warping takes place in the laminated soft magnetic member and in the soft magnetic sheet. This may be a hindrance to handling when the obtained laminated soft magnetic member or soft magnetic sheet is incorporated in a cellular phone and the like, resulting in a lower workability. Accordingly, the heat treatment can be conducted for the purpose of tempering the warping of the laminated soft magnetic member.

BRIEF DESCRIPTION OF THE DRAWINGS

FIG. 1 is a schematic sectional view illustrating the configuration of a soft magnetic sheet in the present embodiment;
FIG. 2 is a schematic sectional view illustrating the configuration of another soft magnetic sheet in the present embodiment;
FIG. 3A is a schematic sectional view illustrating the configuration of a laminated soft magnetic member in the present embodiment;
FIG. 3B is another schematic sectional view illustrating the configuration of a laminated soft magnetic member;
FIG. 4A to FIG. 4C are each a diagram illustrating the production steps of the laminated soft magnetic member;
FIG. 5A to FIG. 5C are each a diagram illustrating the flow of operations for producing the laminated soft magnetic member by use of the soft magnetic sheet shown in FIG. 1;
FIG. 6A to FIG. 6C are each a diagram illustrating the flow of operations for producing the laminated soft magnetic member by use of the soft magnetic sheet shown in FIG. 2;
FIG. 7A and FIG. 7B are each a diagram illustrating the apparatuses used in a lamination step;

FIG. 8 is a diagram illustrating an example of the sheet used in an example; FIG. 8A is a diagram showing a strip-like soft magnetic sheet unrolled from a rolled body and the location of a sheet to be cut out; FIG. 8B is a diagram showing the definition of directions for the cut out sheet;

FIG. 9 is a graph showing the relations between the heat treatment temperature, $\mu'$, and frequency;

FIG. 10 is a graph showing the relations between the heat treatment temperature, $\mu''$, and frequency;

FIG. 11A is a graph showing the relations between the heat treatment temperature and frequency;

FIG. 11B is a graph showing the relations between the heat treatment temperature and $\tan\delta$;

FIG. 12 is a graph showing the relations between the heat treatment temperature, $\mu'$, and frequency;

FIG. 13 is a graph showing the relations between the heat treatment temperature, $\mu''$, and frequency;

FIG. 14A is a graph showing the relations between the heat treatment temperature and frequency;

FIG. 14B is a graph showing the relations between the heat treatment temperature and $\tan\delta$;

FIG. 15 is a graph showing the results for Example 2, in particular, the relations between $\mu'$ and frequency obtained for a 13 $\mu$m thick PET film when the pressure applied for the heat treatment was varied;

FIG. 16 is a graph showing the relations between the pressure applied for the heat treatment, $\mu''$ and frequency;

FIG. 17A is a graph showing the relations between the pressure applied during heat treatment and frequency;

FIG. 17B is a graph showing the relations between the pressure applied during heat treatment and $\tan\delta$;

FIG. 18 is a graph showing the results for Example 3, in particular, the variation of $\mu'$ as a function of the heat treatment time;

FIG. 19 presents graphs showing the results for Example 4, in particular, the variations of the magnetic anisotropy obtained for a 13 $\mu$m thick PET film when the heat treatment temperature was varied;

FIG. 20 is a graph showing the results for Example 4, in particular, the variations of the magnetic anisotropy obtained for a 6 $\mu$m thick PET film when the heat treatment temperature was varied;

FIG. 21A is a graph showing the results for Example 5, in particular, the relation between the heat treatment temperature and the complex permeability when the heat treatment was conducted before and after lamination;

FIG. 21B is a graph showing the results for Example 5, in particular, the relation between the heat treatment temperature and $\tan\delta$ when the heat treatment was conducted before and after lamination;

FIG. 22 is a graph showing the results for Example 6, in particular, varying magnetic anisotropy with varying temperature of heat treatment in the roll method;

FIG. 23 is a graph showing the results for Example 2 (Experiment 7), in particular, the relation between $\mu'$ and the frequency obtained for a soft magnetic sheet when no tension was applied;

FIG. 24 is a graph showing the results for Example 2 (Experiment 7), in particular, the relation between $\mu''$ and the frequency obtained for a soft magnetic sheet when no tension was applied;

FIG. 25 is a graph showing the results for Example 2 (Experiment 7), in particular, the relation between $\mu'$ and the frequency obtained for a soft magnetic sheet when a tension was applied;

FIG. 26 is a graph showing the results for Example 2 (Experiment 7), in particular, the relation between $\mu''$ and the frequency obtained for a soft magnetic sheet when a tension was applied;

FIG. 27 is a graph showing the results for Example 2 (Experiment 8), in particular, the relation between $\mu'$ and the frequency obtained for a laminated soft magnetic member when a tension was applied; and

FIG. 28 is a graph showing the results for Example 2 (Experiment 8), in particular, the relation between $\mu''$ and the frequency obtained for a laminated soft magnetic member when a tension was applied.

## DETAILED DESCRIPTION OF THE PREFERRED EMBODIMENT

Description will be made below of the embodiment of the present invention.

<Soft Magnetic Sheet>

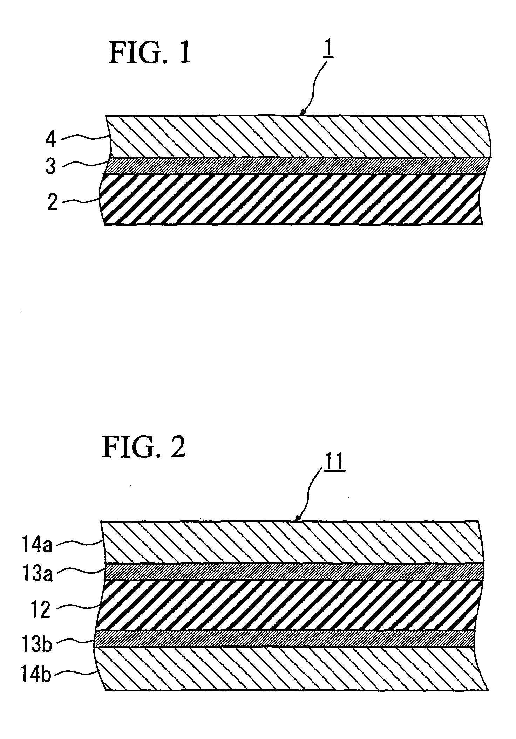

FIGS. 1 and 2 show the examples of the soft magnetic sheets used in the laminated soft magnetic member of the present invention.

A soft magnetic sheet (soft magnetic member) 1 shown in FIG. 1 is constituted with a resin film (insulating resin film) 2, a metal sublayer 3 formed on the resin film 2, and a soft magnetic metal layer 4 formed on the metal sublayer 3.

For the resin film 2, heat-resistant resin materials such as polyimide resin, polyamide resin, fluorocarbon resin and polyamideimide resin, PPS (polyphenylene sulfide) resin, or PET (polyethylene terephthalate) and PBT (polybutylene terephthalate) can be used. In the present embodiment, the following description is based on an example in which PET is used for the resin film 2.

The soft magnetic metal layer 4 can be formed of any of the transition metal elements exhibiting soft magnetism, or an alloy composed of a transition metal element and another metal element. Specific examples include alloys mainly composed of one or more of Fe, Co and Ni, such as an Fe-Ni based alloy, an Fe-Co based alloy and a Co-Ni based alloy. Among these, preferable are the alloys having a saturation flux density of 1.0 T or more, and desirable for the present invention is an Fe-Ni based alloy containing Fe in 20 to 80 wt%. Particularly, an Fe-Ni based alloy containing Fe in 30 to 70 wt% is desirable, and an Fe-Ni based alloy containing Fe in 40 to 65 wt% is more desirable. Additionally, it is desirable that Fe-Co based alloys and Co-Ni-Fe based alloys are used. These alloys can contain one or more of the following elements in 15 wt% or less: Nb, Mo, Ta, W, Zr, Mn, Ti, Cr, Cu and Co. Incidentally, when the soft magnetic metal layer 4 is formed by plating, such elements as C and S are inevitably contained, and the soft magnetic metal layer 4 of the present invention allows the presence of such elements contained.

As for the soft magnetic metal layer 4, either a form of crystalline alloy or a form of amorphous alloy can be used. As an amorphous alloy, Co based alloys and Fe based alloys can be used. Additionally, the present invention allows the use of Fe based microcrystalline alloys. A microcrystalline alloy is generally known as the alloy in which the main component comprises fine crystals of around 0.01 μm in grain size.

The soft magnetic metal layer 4 can be produced by a variety of film formation processes including the plating (electro or electroless) method, vacuum evaporation, sputtering and the like. The film formation processes can be applied each alone. Accordingly, the soft magnetic metal layer 4 can be formed either solely by plating or solely by evaporation. Needless to say, a plurality of film formation processes can be combined. Plating is preferable for the present invention in that plating can form films at lower temperatures than the vacuum evaporation and sputtering methods. This is because in the present invention, the soft magnetic metal layer 4 is formed on a resin film 2, and hence it is desirable that no thermal effect is given to the resin film 2. Additionally, plating has a merit that plating can yield a predetermined thickness of film in a short period of time as compared to the sputtering method. Incidentally, when the soft magnetic metal layer 4 is obtained by plating, some elements such as S contained in the plating bath are mixed in the soft magnetic metal layer 4, and hence the soft magnetic metal layer 4 formed by plating is discriminable from the soft magnetic metal layers 4 formed by other processes.

The metal sublayer 3 plays a role of a conductive layer to be necessary when the soft magnetic metal layer 4 is formed by electroplating on the resin film 2. The metal sublayer 3 can be formed, for example, by the vacuum evaporation method. Additionally, after the metal sublayer 3 has been formed by electroplating, the soft magnetic metal layer 4 can be formed by electroplating. When the soft magnetic metal layer 4 is formed by a method other than electrolytic plating, the metal sublayer 3 need not be formed. In other words, the metal sublayer 3 is an optional element in the present invention. When a soft magnetic metal is used for the metal sublayer 3, the metal sublayer 3 comes to compose a component of soft magnetic metal layer 4.

Now, in the soft magnetic sheet 1, the thickness of the resin film 2 is made to be 50 μm or less. The resin film 2 carries out the function of insulation of the soft magnetic metal layers 4 in the laminated soft magnetic member of the present invention. However, if the insulating layer becomes thick, the packing density of the soft magnetic metal layers 4 is made lower, and accordingly the permeability of the laminated soft magnetic member is lowered; thus, the thickness of the resin film 2 is chosen as described above. The preferable thickness of the resin film 2 is 20 μm or less. Of course, it is difficult to produce an extremely thin resin film 2 and an extremely thin resin film 2 cannot maintain the predetermined strength for forming the soft magnetic metal layer 4. Accordingly, the recommendable thickness of the resin film is either 0.2 μm or more, or 2 μm or more.

It is preferable that the soft magnetic metal layer 4 is 1 μm or less in thickness. This is because with the thickness exceeding such thickness, for example, the eddy current loss becomes high in the high frequency band exceeding 800 MHz, and thus the function as a magnetic material is impaired. Accordingly, it is further preferable for the present embodiment that the thickness of the soft magnetic metal layer 4 is made to be 0.5 μm or less. It is highly necessary that the soft magnetic metal layer 4 is densely formed, and hence it is necessary for the soft magnetic metal layer 4 to have a minimal film thickness which permits forming a dense film by means of a various types of processes. The metal sublayer 3 functions as a conductive layer in electrolytic plating and the thickness thereof of the order of 0.01 μm is sufficient.

The soft magnetic sheet (soft magnetic member) 11 shown in FIG. 2 is different from the soft magnetic sheet 1 shown in FIG. 1 in that the soft magnetic metal layers 4 are formed on both sides of a resin film in FIG. 2, but on one surface of a resin film 2 in FIG. 1. More specifically, the soft magnetic sheet 11 comprises a resin film 12 (insulating resin film), metal sublayers 13a, 13b formed both on the front surface and on the back surface of the resin film 12, and soft magnetic metal layers 14a, 14b formed respectively on the metal sublayers 13a, 13b. The materials, dimensions and production processes for the resin film 12, the metal sublayers 13a, 13b, and the soft magnetic metal layers 14a, 14b can be made similar to those for the soft magnetic sheet 1.

Additionally, in the soft magnetic sheet 11 of the present invention, a resin layer can also be formed on the soft magnetic metal layer 14a.

<Laminated Soft Magnetic Member>

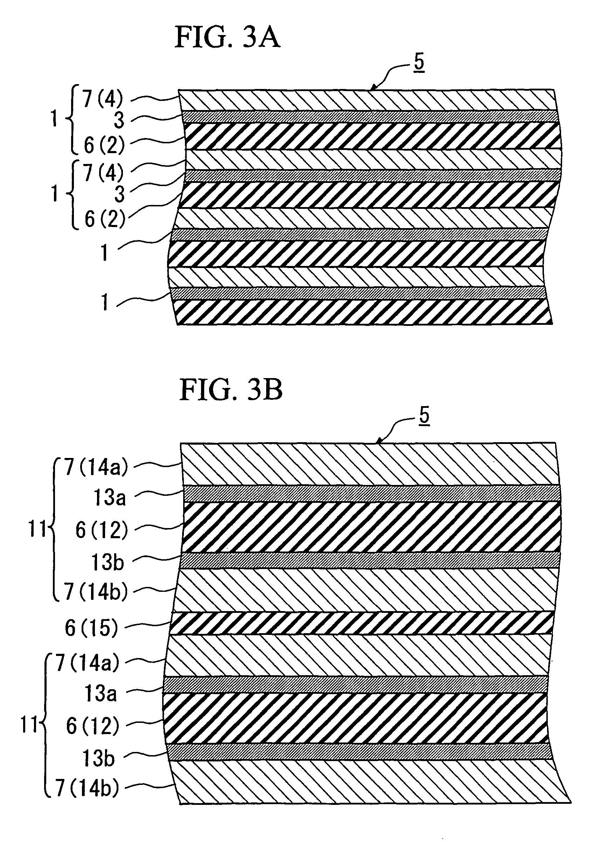

FIG. 3A and FIG. 3B are each a sectional view showing one example of a laminated soft magnetic member (soft magnetic member) 5 of the present embodiment.

As shown in FIGS. 3A and 3B, the laminated soft magnetic member 5 has a sectional structure in which insulating layers 6 and soft magnetic metal layers 7 are alternately laminated. In this connection, it is important to make the overall thickness of the laminated soft magnetic member 5 be 0.5 mm or less. This is because, as described above, when the laminated soft magnetic member 5 is attached to a cellular phone, it is necessary to meet the miniaturization of the cellular phone. The thickness is preferably 0.25 mm or less, more preferably 0.2 mm or less, furthermore preferably 0.15 mm or less, yet furthermore preferably 0.1 mm or less.

As shown in FIGS. 3A and 3B, the laminated soft magnetic member 5 can be obtained by laminating the soft magnetic sheets 1, 11 shown in FIGS. 1 and 2. Thus, the resin films 2, 12 of the soft magnetic sheets 1, 11 constitute the insulating layers 6. Accordingly, the thickness of the insulating layer 6 is made to be 50 μm or less. Of course, when an adhesive is interposed between the layers in the case where the soft magnetic sheets 1, 11 are laminated, the thickness of the insulating layer 6 sometimes becomes thicker than those of the resin films 2, 12. Thus, when an adhesive is used, the thicknesses of the resin films 2, 12 are needed to be specified so that the thickness of the insulating layer 6 may be 50 μm or less. In this case, when the adhesive is made of a resin, the adhesive also comes to constitute the insulating layers 6. Additionally, the soft magnetic metal layers 4, 14a, 14b in the soft magnetic sheets 1, 11 correspond to the soft magnetic metal layer 7.

<Production Methods of Soft Magnetic Sheet and Laminated Soft Magnetic Member>

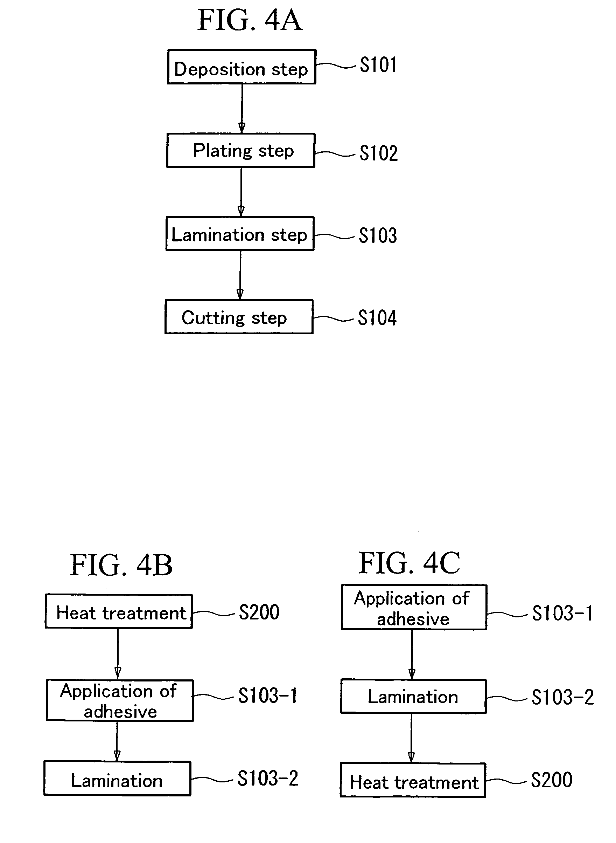

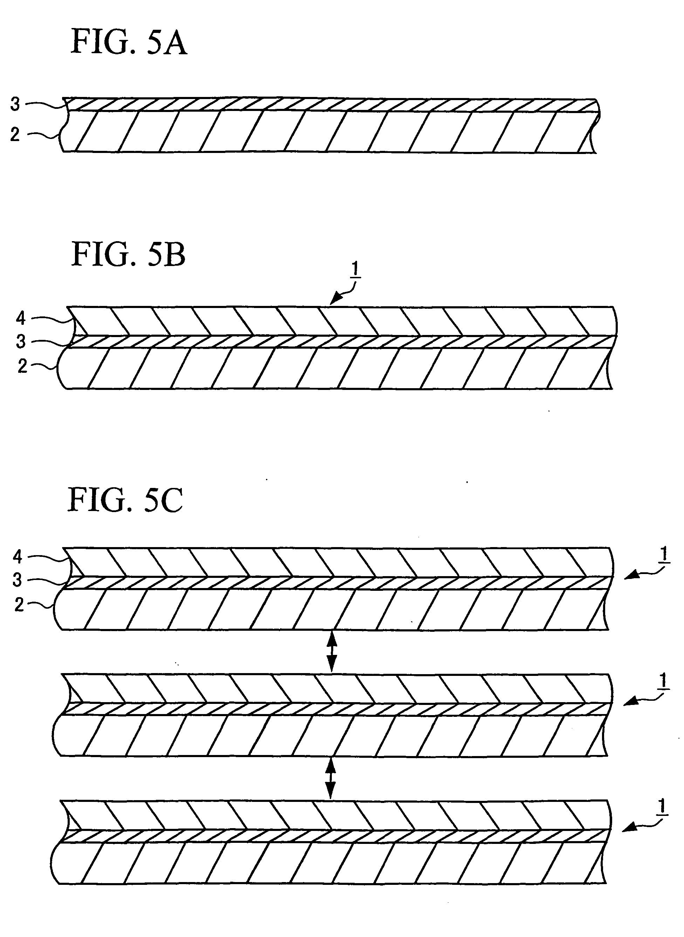

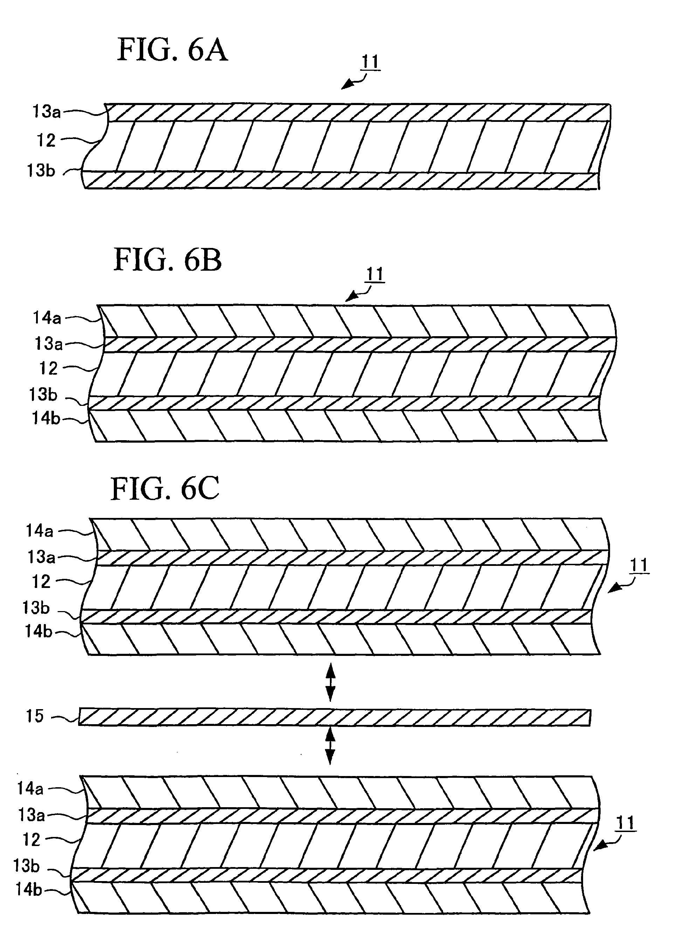

Description will be made below of the production method preferable for obtaining the laminated soft magnetic member 5 on the basis of FIGS. 4 to 6. Incidentally, FIG. 4 illustrates the whole fundamental production steps for obtaining the laminated soft magnetic member 5; FIG. 5 illustrates a production method for obtaining the laminated soft magnetic member 5 by use of the soft magnetic sheet 1 shown in FIG. 1; and FIG. 6 illustrates a production method for obtaining the laminated soft magnetic member 5 by use of the soft magnetic sheet 11 shown in FIG. 2.

In FIGS. 4, 5A and 6, for the purpose of obtaining the soft magnetic sheets 1, 11, the metals used as the raw materials for the metal sublayers 3, 13a, 13b are fused in a crucible placed in a vacuum evaporation apparatus, then the metals are deposited on PET films used as the resin films 2, 12, and thus the metal sublayers 3, 13a, 13b are respectively deposited on the resin films 2, 12 (step S101).

Successively, as shown in FIGS. 4, 5B and 6B, the resin films 2, 12 with the metal sublayers 3, 13a, 13b formed thereon are subjected to, for example, electroplating in a plating apparatus to form the soft magnetic metal layers 4, 14a and 14b (step S102) .

In this way, the soft magnetic sheets 1, 11 are obtained. In this connection, rolled bodied of strip-like films rolled in roll-shape are used as the resin films 2, 12 in the evaporation apparatus and plating apparatus; the resin films 2, 12 unrolled from these rolled bodies are subjected to evaporation and plating treatments,and accordingly the obtainedsoft magnetic sheets 1, 11 take forms of rolled bodies of strip-like films rolled in roll-shape.

Thereafter, as shown in FIGS. 4, 5C and 6C, the obtained plural soft magnetic sheets 1, 11 are laminated (step S103) .

For that purpose, adhesives are applied onto the soft magnetic sheets 1 (or soft magnetic sheets 11) (step S103-1), and then these sheets are laminated for adhesion (step S103-2) .

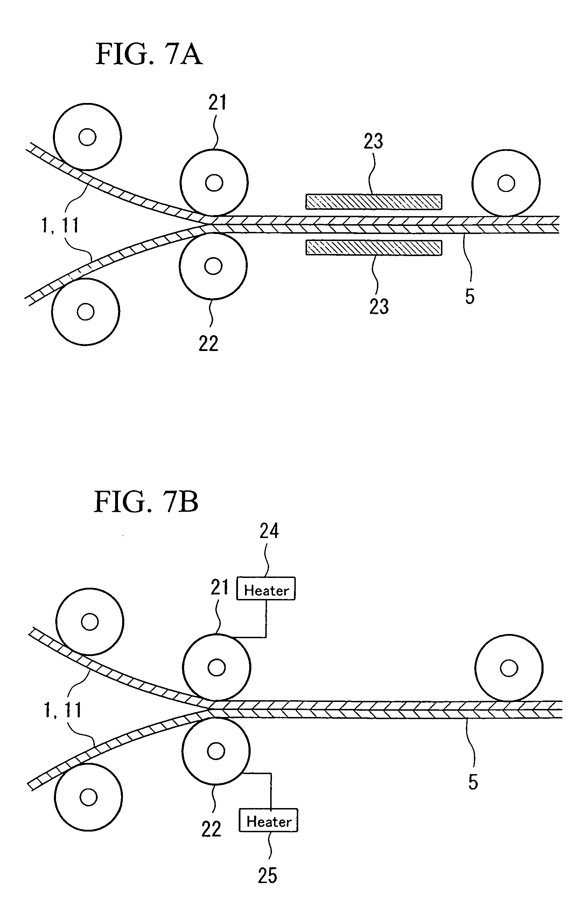

In the lamination step, for example, as shown in FIG. 7, the two soft magnetic sheets 1 (or soft magnetic sheets 11) to be laminated with each other are introduced between two rolls 21, 22 facing each other and pressed by the rolls 21, 22, and thus the two soft magnetic sheets 1, 11 can be laminated.

In the configuration shown in FIG. 6, the soft magnetic sheet 11 has a structure in which the soft magnetic metal layers 14a, 14b are exposed both on the front surface and on the back surface, and hence the soft magnetic sheet 11 cannot be laminated as it is. Accordingly, a resin film (an insulating resin film) 15 is separately prepared, and by laminating the soft magnetic sheets 11 with the resin film 15 interposed therebetween (FIG. 6C, the laminated soft magnetic member 5 is obtained.

Now, in the present embodiment, a predetermined heat treatment is applied, at a stage prior to laminating the obtained soft magnetic sheets 1, 11 as shown in FIG. 4B, or at a stage after the laminated soft magnetic member 5 has been obtained by laminating the soft magnetic sheets 1, 11 as shown in FIG. 4C (step S200) .

Specifically, the heat treatment is applied under predetermined conditions to the soft magnetic sheets 1, 11 or to the laminated soft magnetic member 5. Additionally, a pressing treatment can be concurrently conducted with a predetermined pressure. For example, when an adhesive is used for bonding of the soft magnetic sheets 1, 11, the heat treatment can be conducted in a manner doubling as heating for drying the adhesive.

Such heat treatment conditions and pressing treatment conditions are varied depending on the following various factors including: the use of the laminated soft magnetic member 5 in its completed condition; the materials and thicknesses of the resin films 2, 12 constituting the laminated soft magnetic member 5; the thicknesses and compositions of the metal sublayers 3, 13a, 13b and the soft magnetic metal layers 4, 14a, 14b; and the lamination number of the soft magnetic sheets 1, 11 in the laminated soft magnetic member 5 in its completed condition. Accordingly, in consideration of these factors, the optimal heat treatment conditions and the optimal pressing treatment conditions are predetermined.

For instance, when the resin films 2, 12 constituting the soft magnetic sheets 1, 11 and the laminated soft magnetic member 5 are 13 μm thick PET films, 0.014 μm thick Ni films are formed by vacuum evaporation as the metal sublayers 3, 13a, 13b, and 0.15 μm thick 81 wt% Ni-19 w% Fe alloy (Permalloy) films are formed by plating as the soft magnetic metal layers 4, 14a, 14b, it is particularly preferable that the heat treatment temperature is 70 to 150°C, and if the temperature is held over a predetermined period of time, the temperature holding time is 60 seconds or more. Additionally, if the pressing treatment is conducted, the pressure is preferably 180 to 2,000 MPa.

The application of such heat treatment permits improving the magnetic properties of the obtained laminated soft magnetic member 5, controlling the magnetic anisotropy, and preventing the laminated soft magnetic member 5 from being warped.

As shown in FIG. 7A, such heat treatment can be conducted by introducing the soft magnetic sheets 1, 11 or the laminated soft magnetic member 5 into a space in which the atmosphere is heated with the aid of heaters 23 facing the soft magnetic sheets 1, 11 or the laminated soft magnetic member 5, or with the aid of other heaters. Additionally, such pressing treatment can be conducted by applying pressing to the soft magnetic sheets 1, 11 or the laminated soft magnetic member 5, or alternatively, as shown in FIG. 7A, by passing the soft magnetic sheets 1, 11 or the laminated soft magnetic member 5 between the facing rolls 21, 22 with the roll 21 made to exert a predetermined pressure.

Additionally, application of tension to the soft magnetic sheets 1, 11 or the laminated soft magnetic member 5 in the heat treatment permits furthermore improving the magnetic properties. The application of the tension can be conducted by passing the tensioned soft magnetic sheets 1, 11 or the tensioned laminated soft magnetic member 5 between the rolls 21, 22.

Additionally, as shown in FIG. 7B, the heat treatment can be applied to the soft magnetic sheets 1, 11 or the laminated soft magnetic member 5 by heating the rolls 21, 22 themselves to a predetermined temperature by means of heaters 24, 25 and by passing the soft magnetic sheets 1, 11 or the laminated soft magnetic member 5 between the rolls 21, 22. Hereinafter, the latter method will be referred to as the roll method. As an alternative means for maintaining the rolls 21, 22 at a predetermined temperature, oil heated to the predetermined temperature may be circulated in either or both of the rolls 21, 22.

In the case of the roll method, a pressure can be applied to the soft magnetic sheets 1, 11 or the laminated soft magnetic member 5 through the weight of the roll 21 itself, but alternatively press of the roll 21 permits simultaneously applying the heat treatment and the pressing treatment to the soft magnetic sheets 1, 11 or the laminated soft magnetic member 5. Additionally, the tension can be applied by exerting a predetermined torque to either the unrolling unit or the rolling unit for the soft magnetic sheets 1, 11. It is preferable that one roll of the pair of the rolls 21, 22 is formed of a metal such as stainless steel, and the other roll is formed of a heat-resistant rubber. This is for the purpose of preventing the soft magnetic sheets 1, 11 from slipping between the rolls 21, 22.

As shown in FIG. 4A, the laminated soft magnetic member 5, having passed through the above described lamination step and the above described heat treatment step, can be machined into a desired shape by means of the press working and the like, and additionally can be machined to a desired dimension by cutting (step S104) .

A more specific example of the conditions for the heat treatment and pressing treatment is so that the heat treatment temperature is preferably 85°C or above for the purpose of obtaining the magnetic property so that the μ' value is constant up to the frequencies exceeding 800 MHz in the soft magnetic sheets 1, 11 or the laminated soft magnetic member 5.

Additionally, in the heat treatment, the temperature is preferably held at a certain constant value over a certain period of holding time; for instance, for the heat treatment conducted at 85°C, the holding time is preferably 10 seconds or more, more preferably 60 seconds or more. For the additional pressing treatment, if any, the pressure is preferably of the order of 460 MPa if combined with the heat treatment performed at 85°C over a holding time of 60 seconds.

For the purpose of obtaining a magnetic property so that μ' is constant up to the frequencies of 1 to 3 GHz, the heat treatment temperature is preferably 100 to 150°C. For the heat treatment with a constant temperature held over a certain period of time, for example, with a constant temperature of 100°C, the holding time is preferably 10 seconds or more, more preferably 60 seconds or more. For the additional pressing treatment, if any, the pressure is preferably of the order of 920 MPa if combined with the heat treatment performed at 85°C over a holding time of 60 seconds.

Moreover, for the purpose of obtaining a magnetic property with vanishing (small) anisotropy in the above exemplified soft magnetic sheets 1, 11 or laminated soft magnetic member 5, the heat treatment temperature is preferably 70 to 85°C. If the heat treatment condition is set such that the temperature is held at a certain constant value over a certain period of holding time, for the heat treatment at 85°C, the holding time is preferably 10 to 60 seconds. For the additional pressing treatment, if any, the applied pressure is preferably 461 MPa in combination with the heat treatment temperature of 60 to 70°C.

Examples of the heat treatment conditions will be described below on the above exemplified soft magnetic sheets 1, 11 and laminated soft magnetic member 5, for the case in which the thicknesses of the resin films 2, 12 are 6 μm.

For the purpose of obtaining a magnetic property so that μ' is constant for the frequencies of 800 MHz or higher, the heat treatment temperature is preferably 60 to 80°C.

Additionally, for the purpose of obtaining a magnetic property so that μ' is constant up to the frequencies of 1 to 3 GHz, the heat treatment temperature is preferably 80 to 110°C.

Moreover, for the purpose of obtaining a magnetic property with vanishing (small) anisotropy in the above exemplified soft magnetic sheets 1, 11 or laminated soft magnetic member 5, the heat treatment temperature is preferably 60 to 70°C.

The conditions described above are only some from many possible examples. The conditions involving the heat treatment, tensioning treatment and pressing treatment are, as described above, varied depending on the electromagnetic wave frequency intended to be absorbed by the laminated soft magnetic member 5 in its completed condition, the installation position and orientation of the laminated soft magnetic member 5 in an electronic appliance such as a cellular phone, the materials and thicknesses of the resin films 2, 12 constituting the laminated soft magnetic member 5, the thicknesses and compositions of the metal sublayers 3, 13a, 13b and soft magneticmetal layers 4, 14a, 14b, and the like. Additionally, the conditions are varied depending on the temperature holding time duration in the heat treatment and whether the pressing treatment is involved or not involved.

Furthermore, as for the above exemplified conditions, the conditions to be adopted are varied depending on the balance between the magnetic properties and the magnetic anisotropy required for the laminated soft magnetic member 5, and moreover on the production efficiency (the periods of time allottable to the heating, tensioning, and pressing treatments) in the production steps.

The heat treatment and the pressing treatment can be conducted at a stage after the soft magnetic sheets 1, 11 have been obtained and before lamination is conducted or at a stage after the laminated soft magnetic member 5 has been obtained by laminating the soft magnetic sheets 1, 11; however, even if the heat treatment and the pressing treatment are respectively conducted under the same conditions, the magnetic properties and the like to be obtained are variable depending on whether these treatments are conducted before the lamination or after the lamination, so that the conditions are needed to be determined according to the timing of these treatments.

For example, in the above exemplified soft magnetic sheets 1, 11 and laminated soft magnetic member 5, if the same conditions are applied, the case in which the heat treatment and the pressing treatment are conducted after laminating the soft magnetic sheets 1, 11 yields the better magnetic properties than the case in which the heat treatment and the pressing treatment are conducted before laminating the soft magnetic sheets 1, 11.

(Examples)

Now, more detailed description will be made of the present invention with reference to specific examples.

[Example 1]

A 13 μm thick PET film was prepared, and a 0. 014 μm thick Ni film was formed on one surface of the PET film by means of vacuum evaporation. In this case, the PET film was used as a strip-like film unrolled from a rolled body. After the deposition of Ni, a film of 81 wt% Ni-19 wt% Fealloy (Permalloy), a soft magnetic alloy, was formed on the Ni film by use of the below described plating solution, and thus the soft magnetic sheet 1 was obtained. The conditions of the plating solution was such that the bath temperature was 35 to 55°C and the pH was 2.0 to 3.0. Electrolysis was continued with a current density of 2 A/dm$^2$ until the plating thickness reached 0.15 μm. Incidentally, a surfactant was appropriately added to the plating solution for the purpose of preventing the plating film deficiency and reducing the surface tension of the plating solution.

| Reagent name | Chemical formula | Solution composition (g/l) |
|---|---|---|
| Nickel sulfate hexahydrate | $NiSO_4 \cdot 6H_2O$ | 150 to 450 |
| Nickel chloride hexahydrate | $NiCl_2 \cdot 6H_2O$ | 15 to 45 |
| Boric acid | $H_3BO_3$ | 10 to 40 |
| Ferrous sulfate heptahydrate | $FeSO_4 \cdot 7H_2O$ | 1 to 20 |

(continued)

| Reagent name | Chemical formula | Solution composition (g/l) |
|---|---|---|
| Glazing agent | - | 0.1 to 2 |

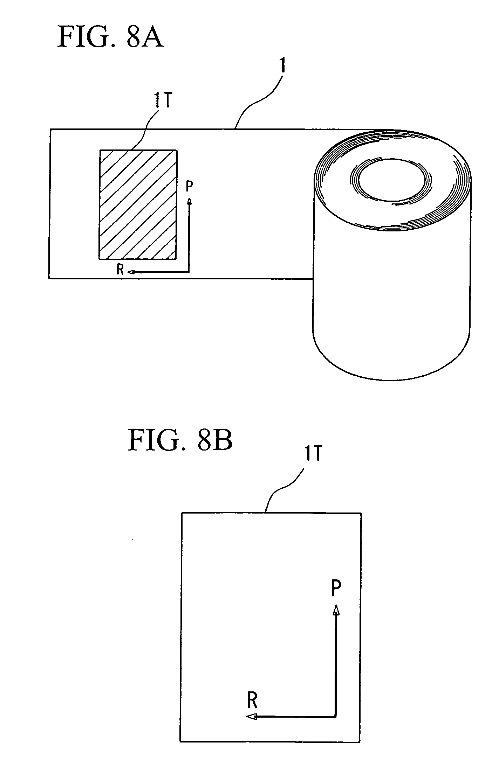

Subsequently, as shown in FIG. 8, the obtained soft magnetic sheet 1 was subjected to blanking into a rectangular shape with a width of 3 cm along the extending direction of the strip-like PET film (the lengthwise direction or the unrolling direction, hereinafter referred to as "the R direction") and a width of 5 cm along the direction of the PET film width (hereinafter referred to as "the P direction") . The blanked sheet 1T was subjected to the heat treatment by maintaining the sheet for 60 seconds at the respective temperatures of 70, 80, 85, 90, 100, 110, 120 and 130°C (not subjected to the pressing treatment). For comparison, a sheet 1T obtained from the soft magnetic sheet 1 not subjected to the heat treatment was also prepared.

The complex permeability measurements were made on the sheets 1T subjected to the heat treatment and the sheet 1T not subjected to the heat treatment by means of a permeability measurement apparatus PMF-3000 manufactured by Ryowa Electronics Co., Ltd. The measurement direction was along the P direction of each sheet 1T.

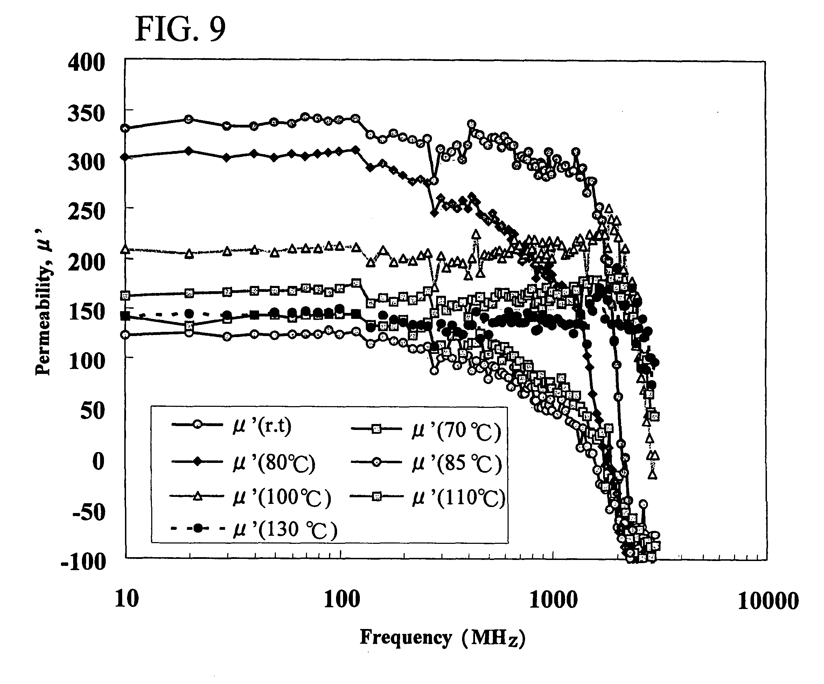

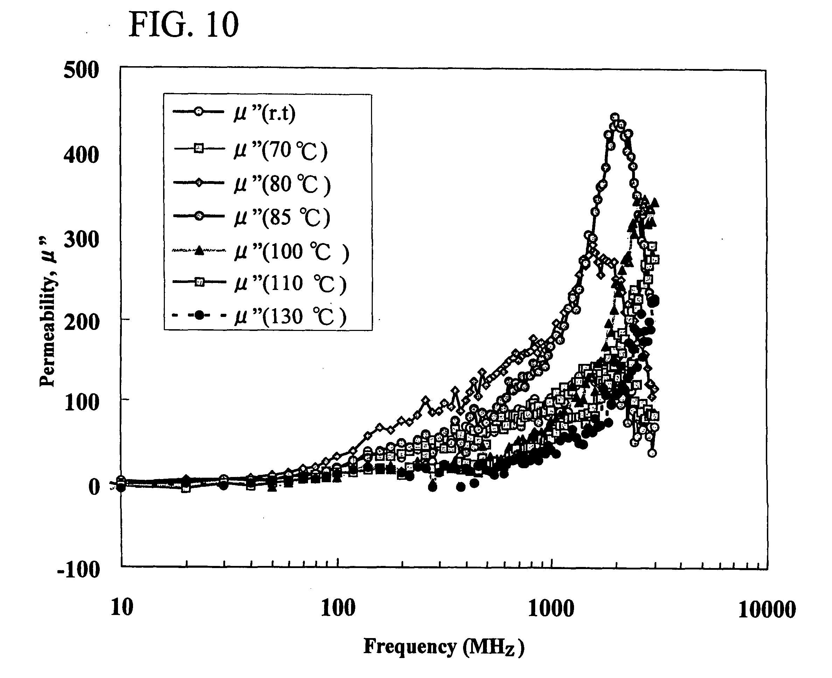

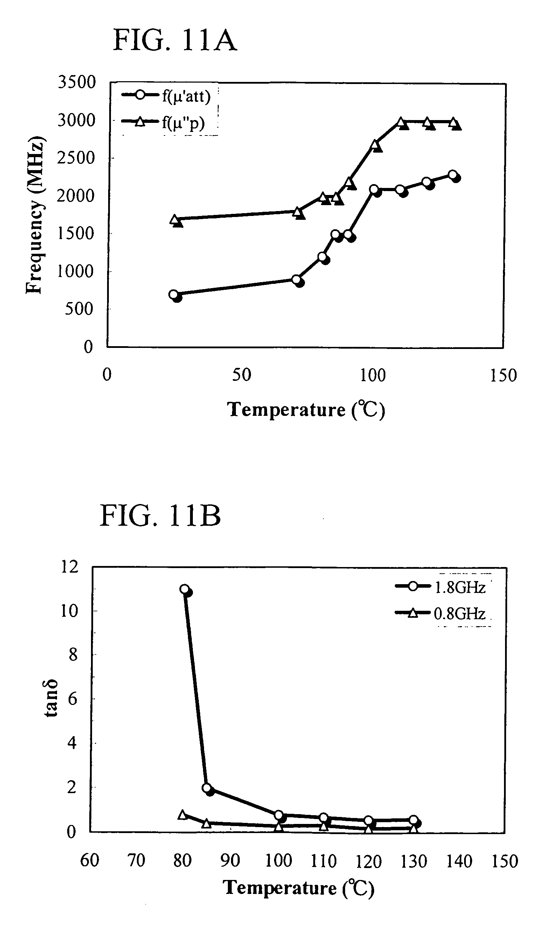

The results thus obtained are shown in FIGS. 9 to 11. FIG. 9 shows the relation between the real part $\mu'$ of the complex permeability and the frequency, while FIG. 10 shows the relation between the imaginary part $\mu''$ of the complex permeability and the frequency. FIG. 11A shows the relations between the attenuation start frequency (f($\mu'$ att)) for $\mu'$ and the peak appearing frequency (f($\mu''$ p)) of $\mu''$ and the heat treatment temperature, obtained from the results shown in FIGS. 9 and 10. FIG. 11B shows the relation between tan$\delta$, namely, ($\mu''/\mu'$) and the heat treatment temperature. In FIGS. 9 and 10, (r.t) refers to the properties of the sheet 1T not subjected to the heat treatment.

As can be seen clearly from FIGS. 9 to 11, the heating temperature set at 70°C or above leads to variations in the magnetic property in relation to the sheet 1T not subjected to the heat treatment. Specifically, it can be seen that for the heat treatment temperatures of 70 to 85°C, both $\mu'$ and $\mu''$ are increased, and with further increasing heat treatment temperatures, both $\mu'$ and $\mu''$ are extended to the higher frequencies. Additionally, as can be seen from FIG. 11B, tan$\delta$ is decreased with increasing heat treatment temperature.

As above, the application of the heat treatment can clearly improve the magnetic property of the obtained sheet 1T, namely, the laminated soft magnetic member 5. Additionally, appropriate setting of the heat treatment temperature, in compliance with the target frequency band, also makes it possible to obtain excellent magnetic properties.

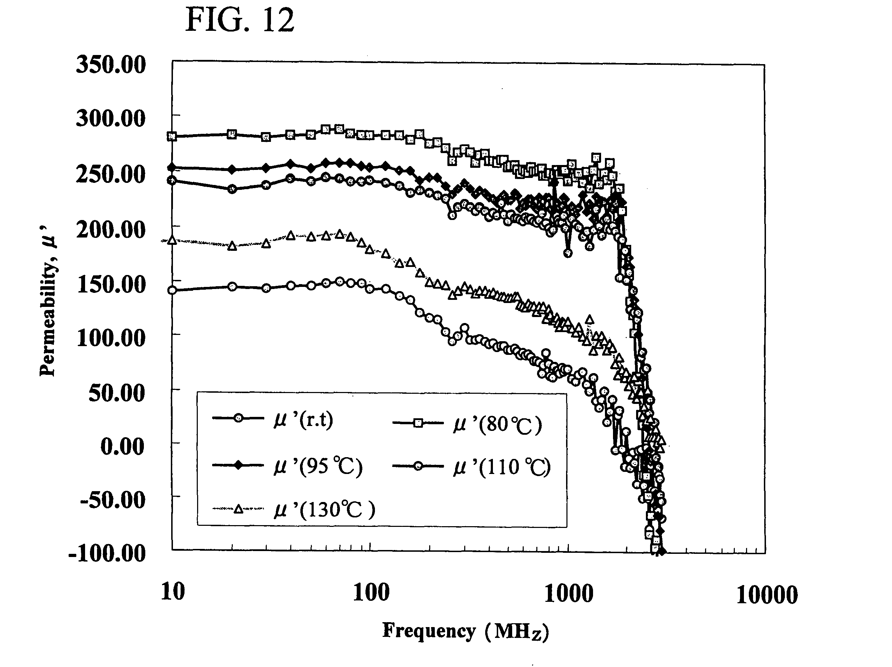

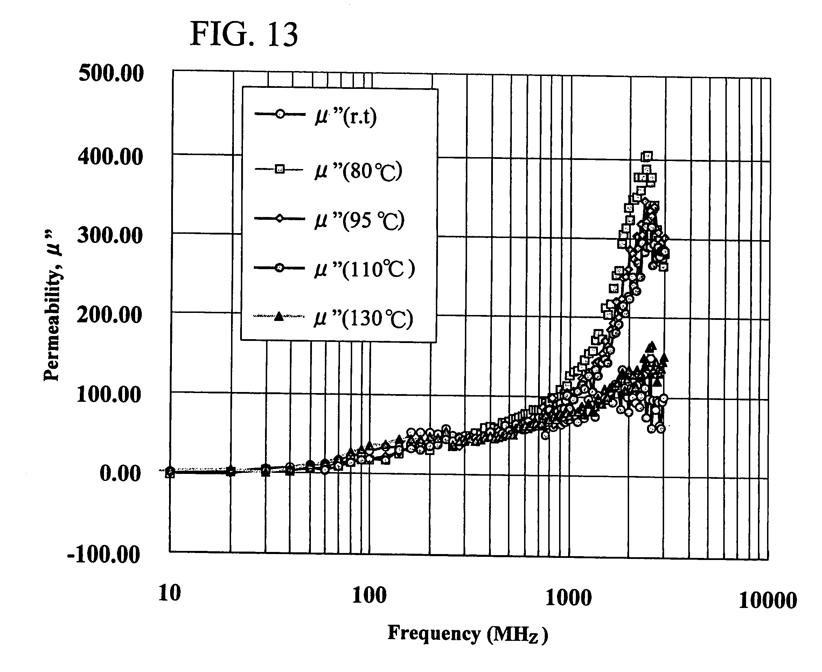

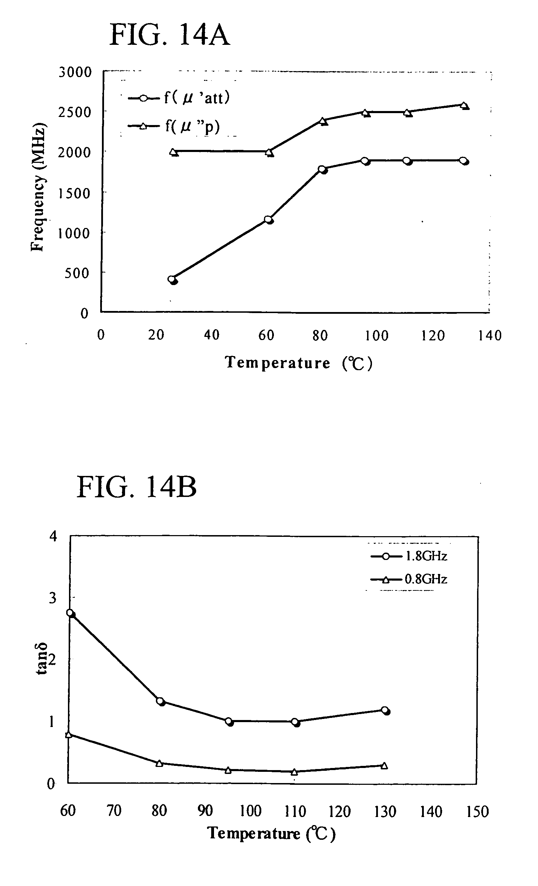

Additionally, in the above described Example 1, similar experiments were performed on the case in which the thickness of the PET film was made to be 6 $\mu$m. The heat treatment temperatures chosen were 80, 95, 110 and 130°C. The results thus obtained are shown in FIGS. 12 to 14.

As shown in FIGS. 12 to 14, also in the case of the 6 $\mu$m thick PET film, similarly to the case of the 13 $\mu$m thick PET film, application of the heat treatment makes it possible to vary the magnetic properties of the soft magnetic sheet 1 and the laminated soft magnetic member 5, and appropriate setting of the heat treatment temperature permits obtaining excellent magnetic properties in conformity with the purposes.

[Example 2]

A sheet 1T obtained according to the steps similar to those in Example 1 was subjected to the pressing treatment at the heat treatment temperature of 85°C and by means of a pressing machine with the respective pressures of 184, 461, 922 and 1,843 MPa.

The relations between the complex permeability and the frequency were investigated on the sheets 1T subjected to the pressing treatment at the respective pressures, the sheet 1T subjected to neither the heat treatment nor the heat treatment and the sheet 1T subjected only to the pressing treatment. The measurement apparatus and conditions were the same as those in Example 1.

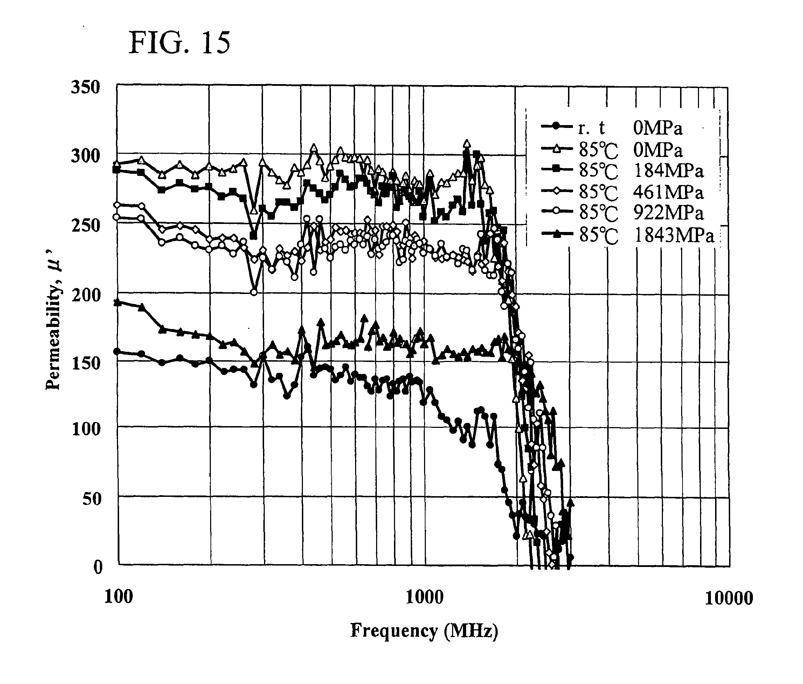

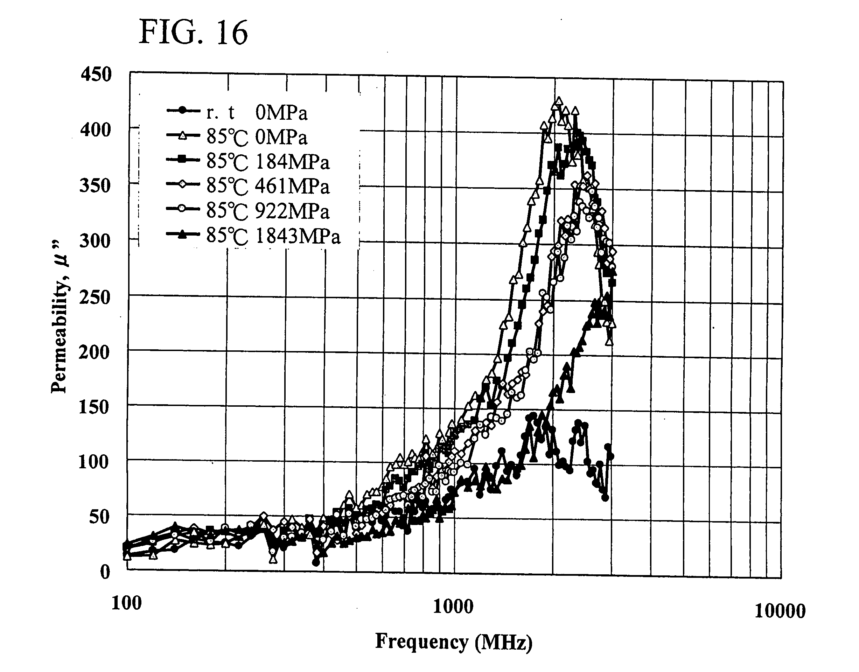

The results thus obtained are shown in FIGS. 15 to 17.

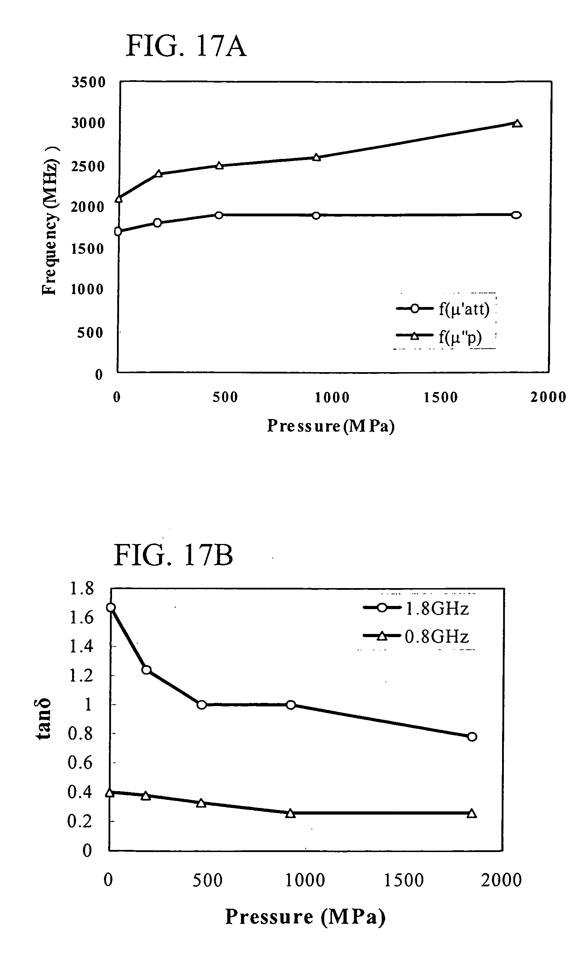

As shown in FIGS. 15 to 17, variation of the pressing treatment conditions leads to the variations of the complex permeability. Specifically, as can be seen from FIG. 17A, $\mu'$ is extended to a higher frequency side with increasing pressure; while as can be seen from FIG. 17B, tan$\delta$ is decreased with increasing pressure.

Thus, it can be seen that the application of the pressing treatment and the variation of the pressure conditions thereof permit controlling the magnetic properties of the soft magnetic sheet 1 and the laminated soft magnetic member 5.

[Example 3]

The sheets 1T obtained according to the steps similar to those in Example 1 were subjected to evaluation by varying the heat treatment time. The heat treatment temperature was set at 85°C and the heat treatment time (the temperature holding time) was set at 10, 30, 60 and 300 seconds. The sheets 1T were measured for $\mu'$ at the frequency of 10 MHz along the P and R directions.

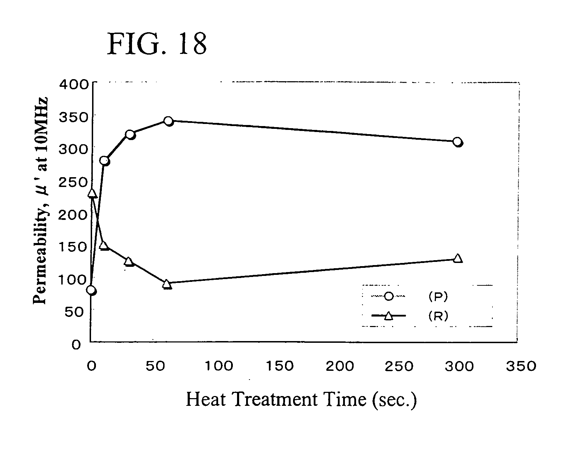

The results thus obtained are shown in FIG. 18.

As shown in FIG. 18, the heat treatment time of 10 seconds or more leads to drastic increase of $\mu'$ along the P direction. Subsequently, with increasing time of the heat treatment, $\mu'$ tends to be improved. With the heat treatment time of 60 seconds, $\mu'$ exhibits a maximum, so that for the purpose of attaining the largest improvement of $\mu'$, it is preferable that the heat treatment time is made to be at least 60 seconds.

Along the perpendicular R direction, tendencies are found to be reversed in relation to those along the P direction. Specifically, the heat treatment time made to be 10 seconds or more leads to drastic decrease of $\mu'$ along the R direction. Subsequently, with increasing time of the heat treatment, $\mu'$ tends to be decreased.

In this way, variation of the heat treatment time can vary $\mu'$. In this case, as can be seen from FIG. 18, for the vanishing time of the heat treatment, namely, for no application of the heat treatment, $\mu'$ along the R direction is higher than $\mu'$ along the P direction, and the soft magnetic sheet 1 concerned or the laminated soft magnetic member 5 concerned is anisotropic in its magnetic properties. When the heat treatment time is 10 seconds or less for such soft magnetic sheet 1 or the laminated soft magnetic member 5, the magnetic anisotropy is reversed. Accordingly, application of the heat treatment to the soft magnetic sheet 1 or the laminated soft magnetic member 5 and additional appropriate setting of the heat treatment time thereof permit obtaining the soft magnetic sheet 1 or the laminated soft magnetic member 5 with vanishing (small) magnetic anisotropy or with the desired magnetic anisotropy.

[Example 4]

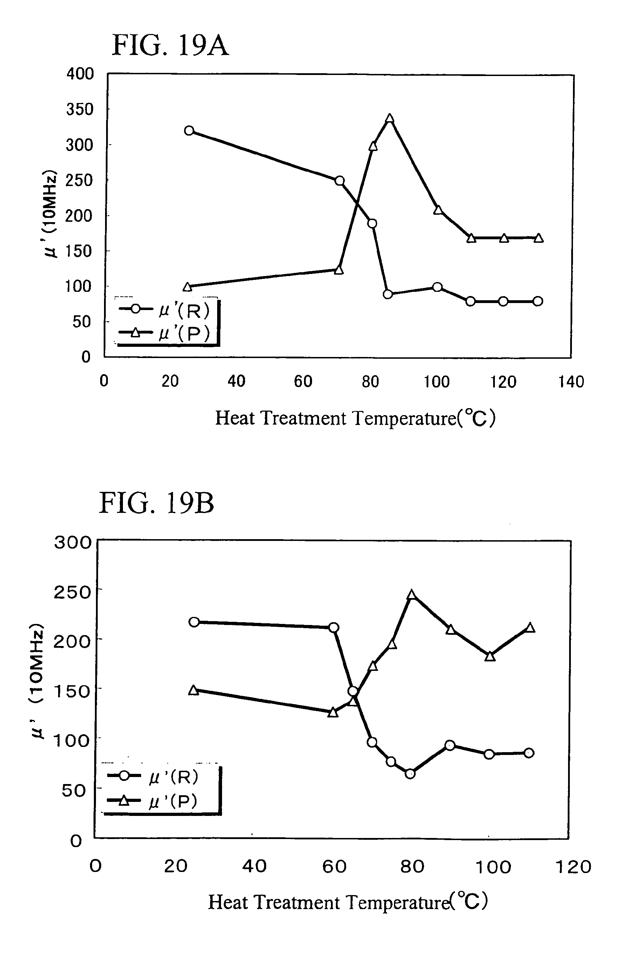

The magnetic anisotropy was evaluated on the sheets 1T obtained according to the steps similar to those in Example 1 by varying the heat treatment temperature. The measurements of $\mu'$ for the frequency of 10 MHz along the P and R directions were performed on the sheets 1T obtained under the conditions in which no pressing treatment is conducted (under the pressure of 0 MPa) by setting the heat treatment temperature at room temperature (the case where no heat treatment was conducted; 25°C in FIG. 19), 70, 80, 85, 100, 110, 120 and 130°C with the temperature holding time kept constant at 60 seconds, and on the sheets 1T obtained under the pressing conditions (under the pressure of 461 MPa), by setting the heat treatment temperature at room temperature (the case where no heat treatment was conducted), 60, 65, 70, 75, 80, 90, 100 and 110°C with the temperature holding time kept constant at 60 seconds.

The results thus obtained are shown in FIG. 19. FIG. 19A shows the results for the case in which no pressing treatment was conducted, while FIG. 19B shows the results for the case in which the pressing treatment was conducted.

As shown in FIG. 19, the heat treatment provided variations for both of the P and R directions; in particular, $\mu'$ drastically changed over the range from 70 to 85°C when no pressing treatment was involved as shown in FIG. 19A, and over the range from 60 to 80°C when the pressing treatment was involved as shown in FIG. 19B. As for the P direction, $\mu'$ reached the maximum at the heat treatment temperature of 85°C when no pressing treatment was involved and at the heat treatment temperature of 80°C when the pressing treatment is involved; so that for the purpose of attaining the largest improvement of $\mu'$ along the P direction, the heat treatment temperature is found to be preferably adjusted to the above described conditions.

Additionally, the P direction and the R direction perpendicular to the P direction exhibit tendencies opposing each other.

As described above, by varying the heat treatment temperature, $\mu'$ can be varied either for the case involving no pressing treatment or for the case involving the pressing treatment. In this connection, as can be seen from FIG. 19, for the case in which the heat treatment temperature was set at room temperature (25°C in FIG. 19), namely, for the case in which no heat treatment was conducted, $\mu'$ is higher along the R direction than along the P direction, so that the soft magnetic sheet 1 or the laminated soft magnetic member 5 is found to have the magnetic anisotropy. Here, it can be seen that the magnetic anisotropy becomes small at the heat treatment temperatures of 70 to 80°C for the case involving no pressing treatment, and at the heat treatment temperatures of 60 to 70°C, specifically around 65°C, for the case involving the pressing treatment. By applying the heat treatment over a certain period of time to the soft magnetic sheet 1 or the laminated soft magnetic member 5, as described above, and moreover by appropriately setting the temperature of the treatment, it comes to be possible to obtain the soft magnetic sheet 1 or the laminated soft magnetic member 5 with vanishing (small) magnetic anisotropy or with the desired magnetic anisotropy.

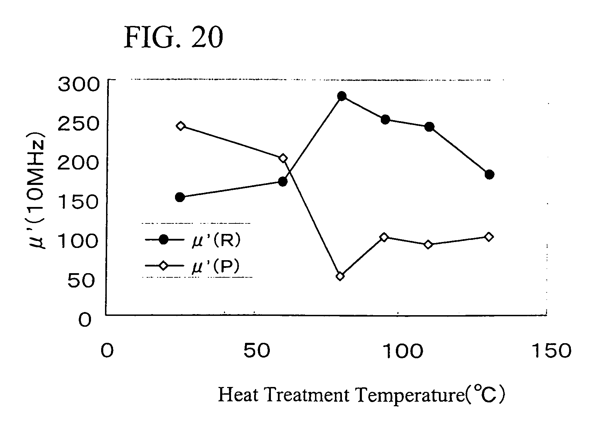

Also in Example 4, similar experiments (only for the case involving no pressing treatment) were performed on the case in which the thickness of the PET film was made to be 6 $\mu$m. The results thus obtained are shown in FIG. 20.

As shown in FIG. 20, also in the case in which the thickness of the PET film was 6 $\mu$m, the magnetic anisotropy can be seen to become small for the heat treatment temperatures of 60 to 70°C, and the obtained results are seen to be similar to those for the case in which the film thickness was 13 $\mu$m.

[Example 5]

Next, evaluation was made of the cases in which the heat treatment step was conducted before the lamination (corresponding to the step sequence in FIG. 4B) and after the lamination (corresponding to the step sequence in FIG. 4C).

The frequency properties were measured similarly to Example 1 on the laminated soft magnetic member 5 formed by laminating, after being subjected to the heat treatment with the aid of an adhesive, the sheets 1T obtained according to the steps similar to those in Example 1 and on the laminated soft magnetic member 5 formed by laminating with the aid of an adhesive the sheets 1T obtained according to the steps similar to those in Example 1 and by subsequently subjecting the laminate to the heat treatment.

Here, the heat treatment temperature was set at 120, 130, 140 and 150°C, and the pressing treatment was conducted with the two pressures of 9.3 and 23 kg/cm$^2$. The sheet delivery rate was constant and 226 mm/min.

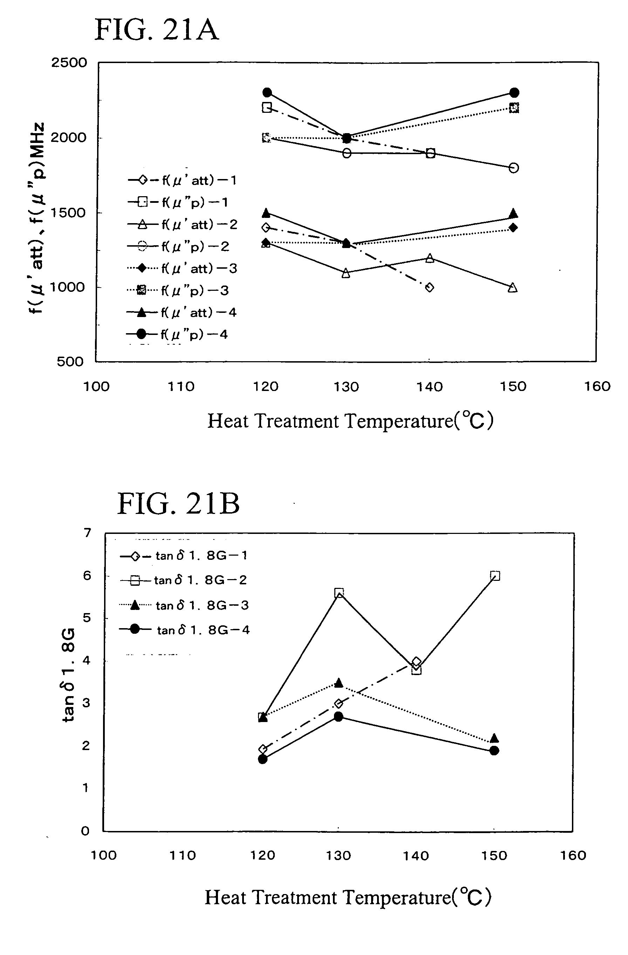

The results thus obtained are shown in FIG. 21. In FIG. 21, the symbols "-1," "-2," "-3" and "-4" respectively signify the following conditions.

"-1": Laminated after the heat treatment, with the pressing condition of 9.3 kg/cm$^2$;
"-2": Laminated after the heat treatment, with the pressing condition of 23 kg/cm$^2$;
"-3" : Subjected to the heat treatment after the lamination, with the pressing condition of 9.3 kg/cm$^2$;
"-4" : Subjected to the heat treatment after the lamination, with the pressing condition of 23 kg/cm$^2$.

As shown in FIG. 21, the attenuated values of $\mu'$ and the peak values of $\mu''$ tend to extend to the higher frequency side when the heat treatment was conducted after lamination. Similarly for $\tan\delta$, $\tan\delta$ exhibits tendencies to become small when the heat treatment was conducted after lamination.

Thus, it is conceivable that the heat treatment conducted after lamination is beneficial to the magnetic properties of the laminated soft magnetic member 5 thus obtained.

[Example 6]

Next, the magnetic anisotropy of the soft magnetic sheet 1 was evaluated for the case in which the roll method was applied under varied conditions.

Here, the temperature of the rolls was set at 80, 100, 110, 120, and 130°C, and under the condition that no pressure was applied to the rolls, the respective $\mu'$ values along the P and R directions were measured at the frequency of 10 MHz. It should be noted that the pressure of 2.48 kgf/cm$^2$ due to the weight of the roll itself was applied to the sheet 1T. The rate of the sheet 1T delivery made by the roll was set at 56.5 mm/min.

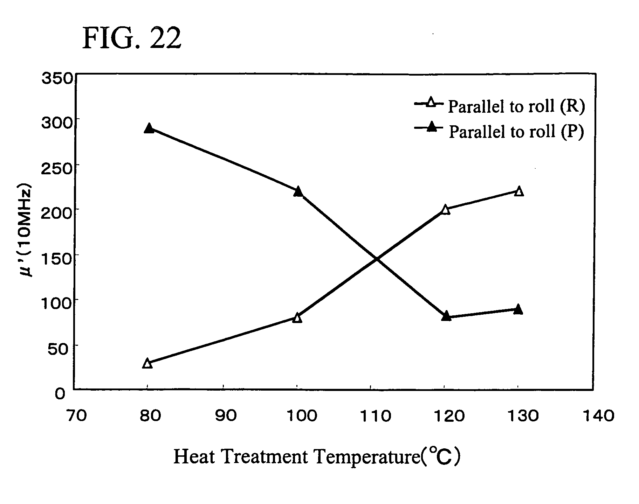

The results thus obtained are shown in FIG. 22.

As shown in FIG. 22, also in the roll method, the heat treatment provided the variation of $\mu'$ both along the P direction and along the R direction. The tendency found for the P direction and the tendency found for the R direction are opposite to each other. These tendencies are similar to those found in Example 4 (FIG. 19A). The vanishing magnetic anisotropy was able to be confirmed around the heat treatment temperature of 110°C.

As described above, also in the roll method, by varying the heat treatment temperature, $\mu'$ can be varied, so that by applying the heat treatment to the soft magnetic sheet 1 or the laminated soft magnetic member 5, and moreover by appropriately setting the temperature of the treatment, it comes to be possible to obtain the soft magnetic sheet 1 or the laminated soft magnetic member 5 with vanishing (small) magnetic anisotropy or with the desired magnetic anisotropy.

[Example 7]

A 13 $\mu$m thick PET film was prepared, and a 0.019 $\mu$m thick Ni film was formed on the PET film (on one surface thereof) by vacuum evaporation. In this case, similarly to Example 1, the PET film used was a strip-like film unrolled from a rolled body. After deposition of Ni, a film of Ni-59 Fe (wt%) alloy, a soft magnetic alloy, was formed on the Ni film by using the same plating solution as that used in Example 1 to obtain the soft magnetic sheet 1. The conditions for the plating solution were the same as those in Example 1. Electrolysis was continued with a current density of 2 A/dm$^2$ until the plating thickness reached 0.2 $\mu$m. Incidentally, a surfactant was appropriately added to the plating solution for the purpose of preventing the plating film deficiency and reducing the surface tension of the plating solution.

The soft magnetic sheet 1 thus obtained was subjected to rolling by use of a pair of rolls. The pair of rolls were constituted with the above described stainless steel roll and the above described heat-resistant rubber roll; the stainless steel roll was heated by circulating oil maintained at a predetermined temperature inside the roll. The diameters of the rolls were 60 mm, the rotation rate was 1.2 rpm, and the applied pressure was 9.3 kgf/cm$^2$. Two cases

were chosen for rolling: in one case, a tension of 0.1 σ (σ= the tensile strength of the PET film) was applied to the soft magnetic sheet 1 and in the other case no tension was applied.

Subsequently, as shown in FIG. 8, the obtained soft magnetic sheet 1 was subjected to blanking into a rectangular shape with a width of 3 cm along the extending direction of the strip-like PET film (the above described R direction) and a width of 5 cm along the direction of the film width (the above described P direction), to prepare the sample for the complex permeability measurement. The complex permeability measurements were made by means of a permeability measurement apparatus PMF-3000 manufactured by Ryowa Electronics Co. , Ltd. The chosen measurement direction was the P direction of each sheet 1T.

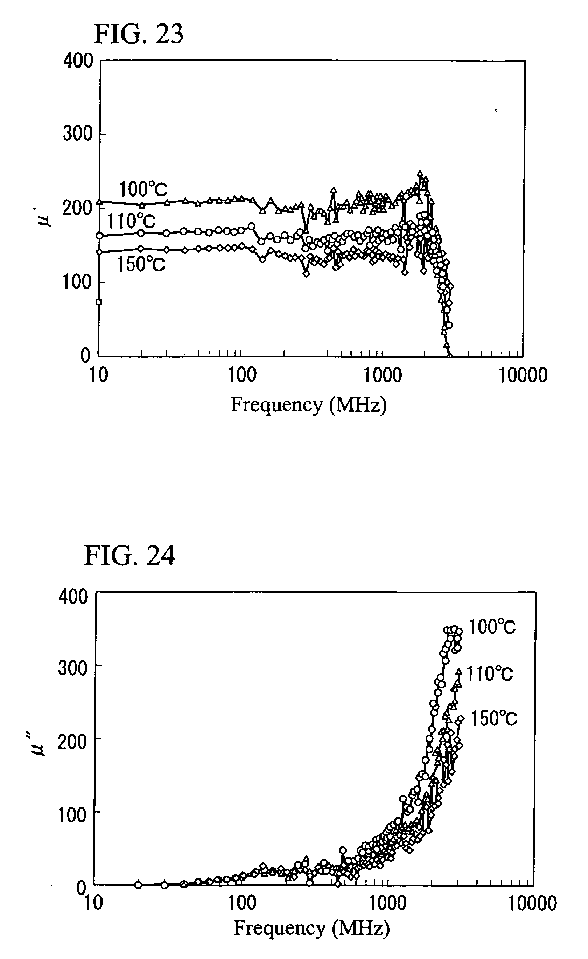

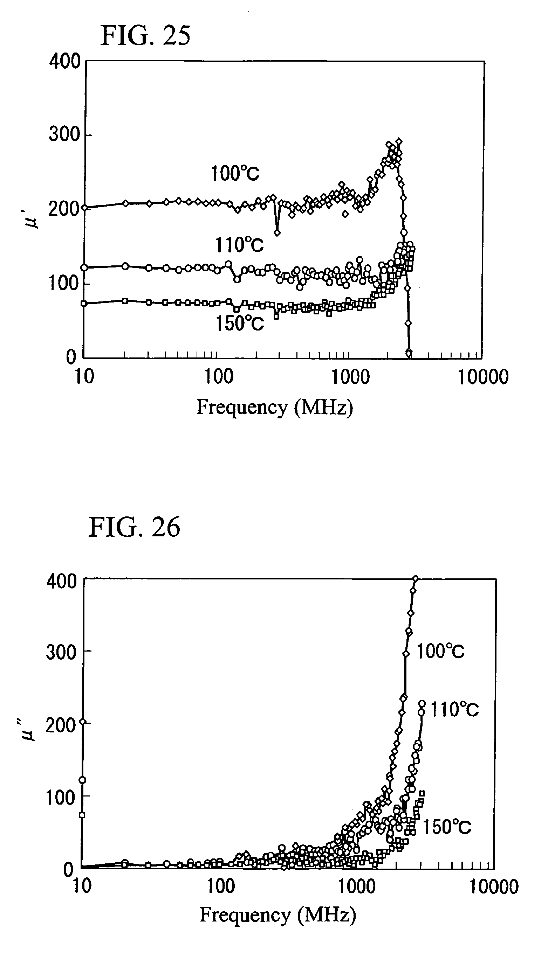

The results thus obtained are shown in FIGS. 23 to 26. FIG. 23 shows the relation between the real part μ' of the complex permeability in the soft magnetic sheet 1 with no tension applied and the frequency, and FIG. 24 shows the relation between the imaginary part μ" of the complex permeability in the soft magnetic sheet 1 with no tension applied and the frequency. FIG. 25 shows the relation between the real part μ' of the complex permeability in the soft magnetic sheet 1 with a tension applied and the frequency, and FIG. 26 shows the relation between the imaginary part μ" of the complex permeability in the soft magnetic sheet 1 with a tension applied and the frequency.

As shown in FIGS. 23 to 26, it can be seen that application of the heat treatment reduces the imaginary part μ" of the complex permeability, and displaces the attenuation start frequency for the real part μ' of the complex permeability to the higher frequencies. Particularly, it has been found that application of the heat treatment combined with concurrent application of the tension more reduces the imaginary part μ" of the complex permeability, yielding excellent complex magnetic permeabilities.

As described above, it is apparent that application of the heat treatment combined with concurrent application of the tension can improve the magnetic property of the obtained soft magnetic sheet 1. Additionally, appropriate setting of the heat treatment temperature in compliance with the target frequency band can lead to more excellent magnetic properties.

[Example 8]

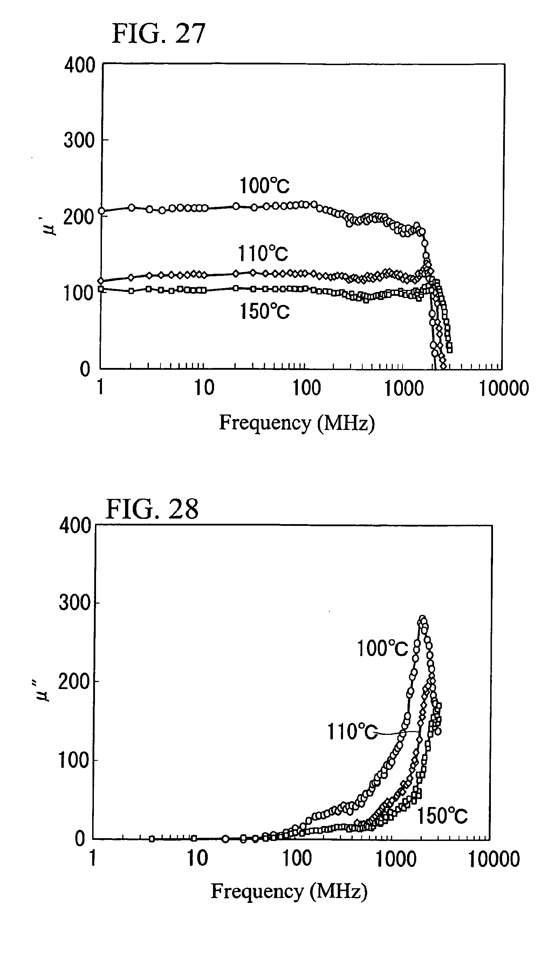

The soft magnetic sheet 1 (before heat treatment) produced in Example 7 was cut to a predetermined length, the five sheets thus obtained were laminated together by applying rolling with the aid of the rolls under the same conditions as those in Example 7, and consequently a laminated soft magnetic member was obtained. The complex permeability was measured on the laminated soft magnetic member thus obtained similarly to Example 7. The results thus obtained are shown in FIGS. 27 and 28. FIG. 27 shows the relation between the real part μ' of the complex permeability and the frequency, and FIG. 28 shows the relation between the imaginary part μ" of the complex permeability and the frequency.

As shown in FIGS. 27 and 28, it can be seen that the frequencies around which the imaginary part μ" of the complex permeability starts to be reduced and the real part μ' of the complex permeability starts to attenuate, are displaced to the higher frequency side.

According to the present invention, a laminated soft magnetic member can be provided which has excellent permeability in the high frequency band even when the member is thin. Additionally, the magnetic properties of the above described member can be improved and can be adjusted in compliance with the purposes. Additionally, the warping of the laminated soft magnetic member can be controlled, so that the workability in assembling can be improved.

Additionally, according to the present invention, a sheet like soft magnetic member high in magnetic property can be provided.

**Claims**

1. A production method of a laminated soft magnetic member in which a plurality of soft magnetic metal layers and insulating layers interposed between said plurality of soft magnetic metal layers are laminated together, the method comprising steps of:

   sheet formation step for obtaining a soft magnetic sheet by directly or indirectly forming said soft magnetic metal layer on an insulating resin film constituting said insulating layer;
   lamination step for obtaining said laminated soft magnetic member by laminating a plurality of said soft magnetic sheets; and
   heat treatment step for subjecting said soft magnetic sheet obtained in said sheet formation step or said laminated soft magnetic member obtained in said lamination step to heat treatment under the conditions set depending on the magnetic properties required for said laminated soft magnetic member in the completed condition thereof.

**2.** A production method of the laminated soft magnetic member according to claim 1, wherein said heat treatment step is conducted prior to said lamination step.

**3.** A production method of the laminated soft magnetic member according to claim 1, wherein said heat treatment step is conducted subsequent to said lamination step.

**4.** A production method of the laminated soft magnetic member according to claim 1, wherein said heat treatment step is conducted concurrently with said lamination step.

**5.** A production method of the laminated soft magnetic member according to claim 4, wherein said heat treatment step is conducted concurrently with said lamination step so that a plurality of said soft magnetic sheets obtained in said sheet formation step are made to pass between rolls facing each other for lamination thereof, said rolls being maintained at a predetermined temperature by heating.

**6.** A production method of the laminated soft magnetic member according to claim 1, wherein a predetermined pressure is applied in said heat treatment step to said soft magnetic sheet obtained in said sheet formation step or said laminated soft magnetic member obtained in said lamination step.

**7.** A production method of a laminated soft magnetic member according to claim 1, wherein said heat treatment is conducted under the condition in which a predetermined tension is applied.

**8.** A production method of a laminated soft magnetic member in which a plurality of soft magnetic metal layers and insulating layers interposed between said plurality of the soft magnetic metal layers are laminated together, the method comprising steps of:

sheet formation step for obtaining a soft magnetic sheet by forming said soft magnetic metal layer on an insulating resin film constituting said insulating layer;

lamination step for obtaining said laminated soft magnetic member by laminating a plurality of said soft magnetic sheets; and

heat treatment step for subjecting said soft magnetic sheet obtained in said sheet formation step or said laminated soft magnetic member obtained in said lamination step to a heat treatment under the condition in which a predetermined tension is applied thereto.

**9.** A production method of the laminated soft magnetic member according to claim 8, wherein the relation of $0.01\,\sigma \leq T < 0.1\,\sigma$ is satisfied where T denotes said predetermined tension and $\sigma$ denotes the tensile strength of said insulating resin film.

**10.** A production method of the laminated soft magnetic member according to claim 8, wherein said heat treatment is conducted so that either said soft magnetic sheet obtained in said sheet formation step or said laminated soft magnetic member obtained in said lamination step is made to contact a roll maintained at a predetermined temperature.

**11.** A production method of the laminated soft magnetic member according to claim 8, wherein said heat treatment applies rolling to said soft magnetic sheet obtained in said sheet formation step or said laminated magnetic sheet obtained in said sheet formation step by use of a pair of rolls at least one of which is maintained at a predetermined temperature.

**12.** A production method of the laminated soft magnetic member according to claim 11, wherein said laminated soft magnetic member is obtained by applying said rolling to a plurality of said soft magnetic sheets in a superposed condition.

**13.** A production method of a soft magnetic sheet comprising a soft magnetic metal layer formed directly or indirectly on an insulating resin film, the method comprising steps of:

obtaining said soft magnetic sheet by forming said soft magnetic metal layer on said insulating resin film by means of the direct or indirect plating of said soft magnetic metal; and

adjusting the magnetic properties of said soft magnetic sheet under the conditions set depending on the magnetic properties required for a soft magnetic member which is constituted by said soft magnetic sheet, in the completed condition of said soft magnetic member.

**14.** A production method of the soft magnetic sheet according to claim 13, wherein the step for adjusting said magnetic properties is performed by heating said soft magnetic sheet.

**15.** A production method of the soft magnetic sheet according to claim 14, wherein said soft magnetic sheet is heated continuously over a period of time set depending on the magnetic properties required for the complete conditioned soft magnetic member, constituted by said soft magnetic sheet.

**16.** A production method of the soft magnetic sheet according to claim 14, wherein when said soft magnetic sheet is heated, a predetermined pressure is applied to said soft magnetic sheet.

**17.** A production method of the soft magnetic sheet according to claim 14, wherein when said soft magnetic sheet is heated, a predetermined tension is applied to said soft magnetic sheet.

**18.** A production method of the soft magnetic sheet according to claim 13, further comprising a step for laminating a plurality of said soft magnetic sheets.

**19.** A production method of the soft magnetic sheet according to claim 13, wherein in the step for obtaining said soft magnetic sheet, a metal sublayer is formed on said insulating resin film, and then said soft magnetic metal is plated on said metal sublayer.

**20.** A production method of the soft magnetic sheet according to claim 13, wherein said insulating resin film is made of polyethylene terephthalate or polybutylene terephthalate.

**21.** A production method of a soft magnetic sheet comprising a soft magnetic metal layer formed directly or indirectly on an insulating resin film, the method comprising steps of:

obtaining said soft magnetic sheet by forming said soft magnetic metal layer on said insulating resin film by directly or indirectly plating the soft magnetic metal thereon; and
applying heat treatment to said soft magnetic sheet under the condition in which a predetermined tension is applied thereto.

**22.** A production method of the soft magnetic sheet according to claim 21, wherein said heat treatment is conducted so that said soft magnetic sheet is made to pass between a pair of rolls at least one of which is maintained at a predetermined temperature.

**23.** A production method of the soft magnetic sheet according to claim 21, wherein in the step for obtaining said soft magnetic sheet, a metal sublayer is formed on said insulating resin film, and then said soft magnetic metal is plated on said metal sublayer.

**24.** A method for heat treating a laminated soft magnetic member in which a plurality of soft magnetic metal layers and insulating layers interposed between said plurality of the soft magnetic metal layers are laminated together, wherein said laminated soft magnetic member is heat treated so as to provide the properties required for said laminated soft magnetic member in the completed condition thereof.

**25.** A method for heat treating the laminated soft magnetic member according to claim 24, wherein said heat treatment is conducted in order to adjust the magnetic properties of said laminated soft magnetic member.

**26.** A method for heat treating the laminated soft magnetic member according to claim 24, wherein said heat treatment is conducted in order to adjust the warping of said laminated soft magnetic member.

FIG. 1

1

4

3

2

FIG. 2

11

14a

13a

12

13b

14b

# FIG. 3A

# FIG. 3B

# FIG. 4A

Deposition step — S101

Plating step — S102

Lamination step — S103

Cutting step — S104

# FIG. 4B

Heat treatment — S200

Application of adhesive — S103-1

Lamination — S103-2

# FIG. 4C

Application of adhesive — S103-1

Lamination — S103-2

Heat treatment — S200

## FIG. 5A

## FIG. 5B

## FIG. 5C

## FIG. 6A

## FIG. 6B

## FIG. 6C

FIG. 7A

FIG. 7B

FIG. 8A

FIG. 8B

FIG. 9

EP 1 460 656 A1

FIG. 10

EP 1 460 656 A1

FIG. 11A

FIG. 11B

FIG. 12

EP 1 460 656 A1

## FIG. 13

## FIG. 14A

## FIG. 14B

# FIG. 15

EP 1 460 656 A1

## FIG. 16

EP 1 460 656 A1

## FIG. 17A

## FIG. 17B

## FIG. 18

FIG. 19A

FIG. 19B

FIG. 20

FIG. 21A

FIG. 21B

FIG. 22

FIG. 23

FIG. 24

FIG. 25

FIG. 26

## FIG. 27

## FIG. 28

## EUROPEAN SEARCH REPORT

**European Patent Office**

Application Number

EP 04 00 6094

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X,D | PATENT ABSTRACTS OF JAPAN vol. 2003, no. 04, 2 April 2003 (2003-04-02) & JP 2002 359113 A (TDK CORP), 13 December 2002 (2002-12-13) | 1-4, 13-15, 18,19, 24-26 | H01F41/02 H01F1/18 C21D8/12 B32B15/08 |
| A | * abstract * | 5-8, 10-12, 16,17, 21-23 | |
| | * claims 1,4,6,7,10-12,14 * * paragraphs '0001!, '0009!, '0011!, '0013!, '0014!, '0019! * * paragraph '0035!; example 3 * * figures 1-3,5,6 * ----- | | |
| A | WO 00/43556 A (IMPHY UGINE PRECISION ; REYAL JEAN PIERRE (FR); SCHMIT FRANCIS (FR)) 27 July 2000 (2000-07-27) | 1,4-6,8, 10-14, 16,18, 20-22, 24-26 | |
| | * claims 1,2,4,5,10,13 * * page 8, line 10 - page 10, line 6 * * figures 1,2 * ----- | | **TECHNICAL FIELDS SEARCHED (Int.Cl.7)** H01F C21D B32B |
| A | US 2 980 561 A (BRAMBLE JOHN H ET AL) 18 April 1961 (1961-04-18) | 1-5,7,8, 10-15, 17,18, 21,22, 24-26 | |
| | * claims * * column 1, line 38 - column 2, line 24 * * column 3, line 16 - line 17 * ----- -/-- | | |

The present search report has been drawn up for all claims

| Place of search | Date of completion of the search | Examiner |
|---|---|---|
| The Hague | 25 June 2004 | Stichauer, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 460 656 A1**

European Patent Office

**EUROPEAN SEARCH REPORT**

Application Number

EP 04 00 6094

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 4 591 529 A (LOLEY FRANZ ET AL) 27 May 1986 (1986-05-27)<br><br>* claim 1 *<br>* column 4, line 39 - line 53 *<br>* example 1 *<br>----- | 1,3,6,8, 11-16, 18,20, 21,24-26 | |
| A | GB 1 373 096 A (BRITISH STEEL CORP) 6 November 1974 (1974-11-06)<br><br>* claims 1,4,11,15,18 *<br>* page 2, line 86 - line 120 *<br>* figures 1-3 *<br>----- | 1,3-6,8, 10-16, 18, 20-22, 24-26 | |

TECHNICAL FIELDS SEARCHED (Int.Cl.7)

The present search report has been drawn up for all claims

| Place of search | Date of completion of the search | Examiner |
|---|---|---|
| The Hague | 25 June 2004 | Stichauer, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

43

**ANNEX TO THE EUROPEAN SEARCH REPORT
ON EUROPEAN PATENT APPLICATION NO.**                    EP 04 00 6094

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2004

| Patent document cited in search report | | Publication date | Patent family member(s) | | Publication date |
|---|---|---|---|---|---|
| JP 2002359113 | A | 13-12-2002 | NONE | | |
| WO 0043556 | A | 27-07-2000 | FR | 2788455 A1 | 21-07-2000 |
| | | | AU | 3054700 A | 07-08-2000 |
| | | | BR | 0007607 A | 30-10-2001 |
| | | | CA | 2358907 A1 | 27-07-2000 |
| | | | CN | 1341153 T | 20-03-2002 |
| | | | CZ | 20012582 A3 | 13-02-2002 |
| | | | EP | 1147234 A1 | 24-10-2001 |
| | | | EP | 1413632 A2 | 28-04-2004 |
| | | | WO | 0043556 A1 | 27-07-2000 |
| | | | ID | 29815 A | 11-10-2001 |
| | | | JP | 2002538983 T | 19-11-2002 |
| | | | PL | 350245 A1 | 02-12-2002 |
| US 2980561 | A | 18-04-1961 | FR | 1232687 A | 11-10-1960 |
| | | | GB | 873733 A | 26-07-1961 |
| US 4591529 | A | 27-05-1986 | DE | 3333155 A1 | 28-03-1985 |
| | | | AT | 32993 T | 15-04-1988 |
| | | | DE | 3469862 D1 | 21-04-1988 |
| | | | EP | 0141187 A1 | 15-05-1985 |
| GB 1373096 | A | 06-11-1974 | NONE | | |

EPO FORM P0459

For more details about this annex : see Official Journal of the European Patent Office, No. 12/82